# EUROPEAN PATENT SPECIFICATION

(11) **EP 4 542 940 B1**
(45) Date of publication and mention of the grant of the patent: **28.10.2026**
(21) Application number: 24202807.4
(22) Date of filing: 26.09.2024
(51) Int. Cl.: H04L 12/46

(54) **DISTRIBUTED BRIDGING BETWEEN PHYSICAL AND OVERLAY NETWORK SEGMENTS AND BETWEEN HARDWARE AND SOFTWARE-DEFINED OVERLAYS**
VERTEILTE ÜBERBRÜCKUNG ZWISCHEN PHYSISCHEN UND OVERLAY-NETZWERKSEGMENTEN UND ZWISCHEN HARDWARE- UND SOFTWAREDEFINIERTEN ÜBERLAGERUNGEN
PONTAGE DISTRIBUÉ ENTRE DES SEGMENTS DE RÉSEAU PHYSIQUES ET SUPERPOSÉS ET ENTRE DES RECOUVREMENTS DÉFINIS PAR MATÉRIEL ET LOGICIEL

(30) Priority: 19.10.2023 US 202318381804; 19.10.2023 US 202318381806
(43) Date of publication of application: 23.04.2025
(73) Proprietor: VMware LLC, Palo Alto, CA 94304 (US)
(72) Inventor: Hira, Mukesh, Palo Alto, 94304 (US); Zhu, Hongwei, Palo Alto, 94304 (US); Hu, Bo, Palo Alto, 94304 (US)
(74) Representative: Dilg, Haeusler, Schindelmann Patentanwaltsgesellschaft mbH

(56) References cited:
- US-A1- 2015 381 484
- US-A1- 2019 273 625
- US-A1- 2021 136 031

## Description

### BACKGROUND

An entity (e.g., corporation or other enterprise) will often want to migrate an existing datacenter deployment to be managed by a software-defined network management system (e.g., VMware's NSX^{®}). In this case, groups of virtual machines (VMs) on the same virtual local area network (VLAN), which could be many hundreds or even thousands of VMs, will be migrated to a software-defined overlay managed by the network management system (on the same subnet and therefore same broadcast domain). However, due to requirements that downtime be minimized, these VMs cannot all be migrated at once in a typical case, as can be seen in document US 2019/273625 A1. As such, data traffic between the VMs on the VLAN and VMs on the managed overlay need to be bridged. A centralized bridge (or even a cluster) can create a bottleneck, and therefore more optimal solutions to the bridging are required.

### BRIEF SUMMARY

The present invention is defined in the appended claims. Some embodiments provide a method for configuring a network to bridge data messages between a logical overlay network layer 2 (L2) segment (e.g., a virtual extensible local area network (VXLAN) or a generic network virtual encapsulation (Geneve) overlay network) and a physical L2 segment (e.g., a virtual local area network (VLAN)). To enable the bridging in a distributed fashion, in some embodiments a network management system configures forwarding elements, on each host computer in the network on which at least one logical network endpoint (e.g., virtual machine (VM), container, or other data compute node) connected to the logical overlay network L2 segment executes, to operate as distributed bridges. These forwarding elements are configured to bridge (i) data messages sent from the logical network endpoints executing on their host computer to network endpoints connected to the physical L2 segment and (ii) data messages sent from network endpoints connected to the physical L2 segment, executing on their host computer and on other host computers in the network, to the logical network endpoints executing on the identified host computer.

That is, when a logical network endpoint connected to the logical overlay segment sends a data message to a network endpoint connected to the physical network segment, a forwarding element executing on the same host computer as the sending network endpoint performs the bridging operation. On the other hand, when a network endpoint connected to the physical network segment sends a data message to a logical network endpoint connected to the logical overlay segment, a forwarding element executing on the same host computer as the recipient network endpoint performs the bridging operation.

In some embodiments, each host computer in the network (or at least each host computer on which the forwarding elements are managed by the network management system that defines the overlay segment) executes at least a software switching module (e.g., a virtual switch) and a software bridging module module (e.g., a distributed virtual routing and bridging module). When a network endpoint sends a data message, that data message is initially processed by the switching module, which uses an L2 learning table to identify an output interface of the switch for the data message. In some embodiments, this L2 learning table maps the data message's destination L2 address (e.g., MAC address) and L2 segment identifier (e.g., VLAN tag or overlay virtual network identifier (VNI)) to an interface. If the data message requires local bridging (because the headers include a combination of the overlay VNI and a destination MAC address connected to the physical network segment), then the switching module outputs the data message to the local bridging module to be bridged.

The bridging module bridges the data message based on its own bridging table, described further below. After bridging the data message, the bridging module sends the modified data message back to the switching module. At this point, the data message headers include a VLAN tag rather than the overlay VNI, so the learning table at the switching module identifies to output the data message to a port for sending to the datacenter network (e.g., an uplink port). On the other hand, if the data message does not require local bridging (e.g., because the destination endpoint is connected to the same L2 segment as the source endpoint or because the source endpoint is connected to the physical network segment), then the switching module outputs the data message to the uplink port directly (i.e., without any bridging).

When the host computer at which the destination network endpoint executes receives the data message, the virtual switch performs a similar lookup in its L2 learning table. If the destination L2 address is connected to the overlay segment but the data message is a VLAN data message, then the L2 learning table sends the data message to the local bridging module to be bridged. After being bridged, the data message is now an overlay data message and thus can be delivered by the switching module to the destination network endpoint. If the data message is already an overlay data message upon receipt at the host computer, then no bridging is required and the data message can be delivered directly to the network endpoint. Similarly, if the destination network endpoint is connected to the physical L2 segment, then any bridging necessary would have been performed at the source host computer and the data message can be delivered directly (assuming that the data message is now a VLAN data message, as should be the case).

The above description relates to the cases in which the software forwarding modules have already learned the correct output interfaces for the destination MAC address and L2 segment combinations. When the recipient virtual switch has not yet learned the output interface for the destination address and L2 segment combination of a data message, the virtual switch (i) sends a copy of the data message to the bridging module to be bridged (if needed) and (ii) in some cases, sends a copy of the data message to the uplink port for transmission onto the physical network (e.g., as a broadcast message).

The bridging modules, in some embodiments, also store their own bridging tables. Whereas the switch tables map combinations of destination L2 addresses and L2 segments to output ports, the bridging modules map destination L2 addresses to L2 segments (and specify whether the destination is local or remote to its host computer, in some embodiments). These bridging tables are also learned in some embodiments. When a bridging module does not have an entry for a destination L2 address, in some embodiments the bridging module will bridge a data message sent to that address in order so that the switch can broadcast the bridged data message (assuming the switch also does not have an entry for the destination address and L2 segment combination).

In some embodiments, the physical L2 segment and overlay L2 segment span the same broadcast domain during a migration period for the datacenter, as the network endpoints are migrated from the physical L2 segment to the overlay L2 segment. Typically, not all of the network endpoints can be taken down for migration at the same time, so the endpoints are migrated in batches over a period of time (e.g., days, weeks, or even months) during which the bridging is needed for data messages transmitted between endpoints on different L2 segments.

When each network endpoint migrates from the physical L2 segment to the overlay L2 segment, in some embodiments the network endpoint broadcasts a gratuitous address response protocol (GARP) message to the network to indicate that its L2 address now (i) is located at its host computer, (ii) corresponds to a particular layer 3 (L3) address (e.g., IP address), and (iii) is connected to the logical overlay network L2 segment. Some embodiments do not modify either the L2 or L3 address of the network endpoint when migrating that endpoint, but nevertheless ensure that the endpoints send the GARP message to indicate the movement to the overlay segment (and in case the endpoint has moved to a new host computer).

Similarly, if a network endpoint is rolled back from the overlay L2 segment to the physical L2 segment, the network endpoint will again broadcast a GARP message to the network. This rollback may take place, for example, if a problem occurs within the network (e.g., the application to which the migrating endpoints belong is malfunctioning) and the enterprise wants to resolve the problem before engaging in further troubleshooting. In this case, the GARP message indicates that the L2 address of the rolled back network endpoint (i) is located at its host computer, (ii) corresponds to a particular layer 3 (L3) address (e.g., IP address), and (iii) is connected to the physical L2 segment.

The above description relates to migrating network endpoints from a single VLAN to an overlay network segment. In some embodiments, the existing (pre-migration) network is a hardware-implemented L2 overlay that includes multiple VLANs. In a common datacenter setup, a VLAN only spans a single physical network zone (e.g., a rack of host computers). A hardware overlay may span multiple physical network zones, using different VLANs in each of the zones.

In this context, some embodiments configure the forwarding elements executing on host computers along with network endpoints connected to the software-defined overlay to bridge data messages between these network endpoints and network endpoints connected to any of the VLANs. The network endpoints connected to the software-defined overlay may execute on host computers in any of the physical network zones. In addition, the forwarding elements on these host computers are configured, in some embodiments, to bridge data messages to any of the VLANs (i.e., not just the VLAN for the specific network zone in which a given host computer is located).

In the above-described situation (bridging between a single VLAN and the overlay network), the virtual switch on a host computer stores two entries for each MAC address (once all of the data has been learned by the virtual switch). In the case of bridging between a hardware overlay and a software overlay, a virtual switch stores three such entries for at least some of the MAC addresses in some embodiments. The virtual switch for a host computer located in a particular network zone in which a first VLAN is defined will include, for at least some destination MAC addresses, (i) a first entry for data messages associated with the first VLAN and having the particular destination MAC address, (ii) a second entry for data messages associated with the second VLAN and having the particular destination MAC address, and (iii) a third entry for data messages associated with the logical overlay and having the particular destination MAC address. It should be noted that for certain other MAC addresses, the second entry should not be learned at the virtual switch because the virtual switch should never receive data messages directed to those MAC addresses and associated with the second VLAN.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments.

### BRIEF DESCRIPTION OF THE DRAWINGS

The novel features of the invention are set forth in the appended claims. However, for purpose of explanation, several embodiments of the invention are set forth in the following figures.
**Figure 1** conceptually illustrates a network (e.g., within a datacenter or a particular physical network zone of a datacenter) including host computers on which VMs connected to both a logical overlay L2 segment and a physical L2 segment execute.
**Figure 2** conceptually illustrates the architecture of a host computer of some embodiments on which a virtual switch and a virtual router execute to handle the bridging of data messages between a logical overlay L2 segment and a physical L2 segment.
**Figure 3** conceptually illustrates bridging a data message sent from a VLAN VM to an overlay VM on the same host computer.
**Figure 4** conceptually illustrates bridging a data message sent from an overlay VM to a VLAN VM on the same host computer.
**Figure 5** conceptually illustrates bridging a data message sent from an overlay VM to a VLAN VM that is located on a different host computer.
**Figure 6** conceptually illustrates bridging a data message sent from a VLAN VM to an overlay VM located on a different host computer.
**Figure 7** conceptually illustrates the host computers of **Figure 1** over three stages in which one of the VMs is migrated to the overlay segment.
**Figure 8** also conceptually illustrates the host computers of **Figure 1** in which the VM is migrated to the overlay segment and sends out a GARP message to indicate its new status.
**Figure 9** conceptually illustrates a logical view of a network having network endpoints connected across multiple broadcast domains with a legacy device connected to a VLAN in the bridged broadcast domain.
**Figure 10** conceptually illustrates a network in which VMs are migrated from different VLANs in different physical network zones to the same software-defined overlay that spans the multiple physical network zones.
**Figure 11** conceptually illustrates that a network management system provides bridge configuration data to the forwarding elements on the host computers of **Figure 2** that execute overlay VMs.
**Figure 12** conceptually illustrates the virtual switch learning table and the bridging table for the host computer of **Figure 2** on which both an overlay VM and a VLAN VM execute.
**Figure 13** conceptually illustrates an electronic system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments provide a method for configuring a network to bridge data messages between a logical overlay network layer 2 (L2) segment (e.g., a virtual extensible local area network (VXLAN) or a generic network virtual encapsulation (Geneve) overlay network) and a physical L2 segment (e.g., a virtual local area network (VLAN)). To enable the bridging in a distributed fashion, in some embodiments a network management system configures forwarding elements, on each host computer in the network on which at least one logical network endpoint (e.g., virtual machine (VM), container, or other data compute node) connected to the logical overlay network L2 segment executes, to operate as distributed bridges. These forwarding elements are configured to bridge (i) data messages sent from the logical network endpoints executing on their host computer to network endpoints connected to the physical L2 segment and (ii) data messages sent from network endpoints connected to the physical L2 segment, executing on their host computer and on other host computers in the network, to the logical network endpoints executing on the identified host computer.

That is, when a logical network endpoint connected to the logical overlay segment sends a data message to a network endpoint connected to the physical network segment, a forwarding element executing on the same host computer as the sending network endpoint performs the bridging operation. On the other hand, when a network endpoint connected to the physical network segment sends a data message to a logical network endpoint connected to the logical overlay segment, a forwarding element executing on the same host computer as the recipient network endpoint performs the bridging operation.

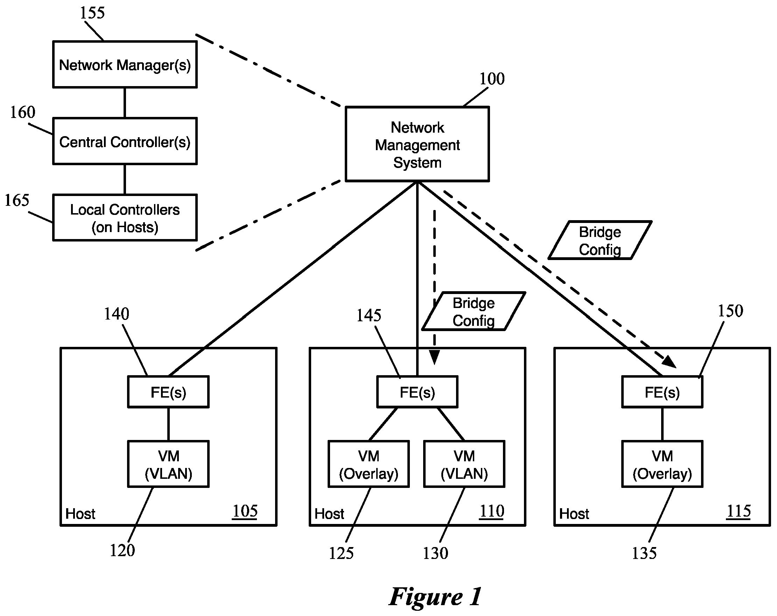

**Figure 1** conceptually illustrates a network (e.g., within a datacenter or a particular physical network zone of a datacenter) including three host computers 105-115 on which four VMs 120-135 execute. The first host computer 105 executes a first VM 120 that is connected to a VLAN, the second host computer 110 executes a second VM 125 that is connected to a logical overlay segment and a third VM 130 that is connected to the VLAN, and the third host computer 115 executes a fourth VM 135 that is connected to the logical overlay segment. The VLAN and the logical overlay segment share a subnet (i.e., the IP addresses of the four VMs 120-135 are on the same subnet) and form a single broadcast domain. However, without bridging, the VMs 120 and 130 cannot communicate with the VMs 125 and 135. It should be noted that, while shown as VMs in the examples herein, the same concepts apply for data messages sent between other types of network endpoints, such as containers, bare metal computers (which in some cases may be connected to a VLAN but not a software-defined overlay), etc.

Each of the host computers 105-115 also executes a set of one or more forwarding elements 140-150 that are configured by a network management system 100 in some embodiments. These forwarding elements 140-150, in some embodiments, execute within virtualization software of their respective host computer and may include one or more software virtual switches, software virtual routers, and/or software bridges. In some embodiments, other networking entities (e.g., middlebox services) are also configured on the host computers 105-115 by the network management system 100.

In this example, the network management system 100 provides bridge configuration data to the forwarding elements 145 and 150 on the second and third host computers 110 and 115 because these host computers include VMs that are connected to the overlay network segment. On the other hand, the first host computer 105 only includes a VM connected to the VLAN (physical network segment) and thus the forwarding elements 140 are not provided the bridge configuration. In some embodiments, the network management system provides bridge configuration data to all of the host computers on which overlay VMs execute but not to host computers on which only physical network segment VMs execute (and thus bridging is performed on all of the host computers with overlay VMs but not host computers with only physical network segment VMs). It should be understood that while the example shown in **Figure 1** includes only three host computers 105-115 with four VMs 120-135, actual deployments may include hundreds or even thousands of host computers with potentially many thousands or even millions of VMs (or other types of data compute nodes).

The network management system 100 may include various different components in different embodiments. In some embodiments, as shown, the network management system 100 includes a set of one or more network managers 155 (a management plane), a set of one or more central controllers 160 (a central control plane), and local controllers 165 that execute on the host computers 105-115. In some such embodiments, the network managers 155 translate logical network configuration received from an administrator into configuration data to be distributed to the various forwarding elements 140-150 (as well as to edge gateways for the network and to forwarding elements on other host computers that do not include any VMs for the particular VLAN or overlay segment shown in the figure). The network managers 155 distribute this data to the central controllers 160, which are responsible for identifying which configuration data should be provided to which host computers (e.g., providing bridge configuration to the host computers 110 and 115). For each host computer 105-115, the central controllers 160 provide the configuration data identified for that host computer to the local controller 165 executing on that host computer. Each local controller 165 is responsible for configuring the forwarding elements on its host computer to implement the network configuration according to the received forwarding data.

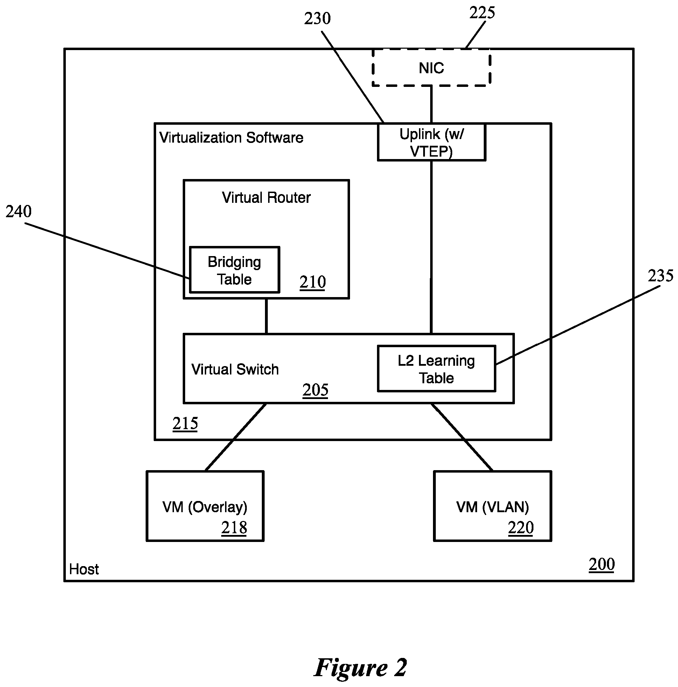

The forwarding elements executing on each host computer to implement the distributed bridging may differ in different embodiments. **Figure 2** conceptually illustrates the architecture of a host computer 200 of some embodiments on which a virtual switch 205 and a virtual router 210 execute to handle the bridging of data messages between a logical overlay L2 segment and a physical L2 segment. In some embodiments, the virtual switch 205 and virtual router 210 execute within virtualization software 215 of the host computer 200. This virtualization software (e.g., hypervisor) enables the execution of VMs 218 and 220, which are connected to an overlay segment and VLAN respectively. The description of **Figure 2** (as well as subsequent figures) refers to a virtual router (e.g., virtual router 210) performing the distributed bridging operations. It should be noted that, in other embodiments, bridging may be performed by a separate module (e.g., a distributed bridging module separate from the virtual router) rather than by the virtual router. In some such embodiments, both the virtual router and the bridging module connect to the virtual switch via separate ports.

The host computer 200 receives data messages from the datacenter network via a network interface controller (NIC) 225 (shown as a dashed line to indicate that this is a hardware component of the host computer 200), while executing an uplink 230 that maps to this NIC 225. The uplink 230 represents various modules that execute in the virtualization software 215 to process incoming data messages prior to those data messages being sent to the virtual switch 205 and outgoing data messages prior to sending those data messages to the datacenter network via the NIC 225 (e.g., decapsulation of incoming data messages and encapsulation of outgoing data messages).

When one of the VMs 218 and 220 network endpoint sends a data message, that data message is initially processed by the virtual switch 205, which uses an L2 learning table 235 to identify an output port of the switch for the data message. In some embodiments, this L2 learning table 235 includes entries that map combinations of L2 addresses (e.g., MAC addresses) and L2 segment identifiers (e.g., VLAN tag or overlay virtual network identifier (VNI)) to output ports. Thus, when a data message is received (having a destination L2 address and an L2 segment identifier), the virtual switch 205 consults its table 235 to determine to which output port to forward the data message. If the output port is unknown (because the port has not yet been learned for the address/segment combination), then in some embodiments the virtual switch 205 broadcasts the data message to all of the ports associated with the L2 segment of the data message (often including the virtual router port).

If a data message requires local bridging, then the virtual switch 205 outputs the data message to the virtual router 210 to be bridged. It should be noted that data messages sent from either the VLAN or the overlay segment to another L2 segment (i.e., another subnet) are also sent to the virtual router 210 to be routed according to its routing configuration. For data messages sent between the VLAN and the overlay segment, the virtual router 210 bridges the data message based on its own bridging table 240. Whereas the virtual switch L2 learning table 235 maps combinations of destination L2 addresses and L2 segments to output ports, the routing modules map destination L2 addresses to L2 segments (and specify whether the destination is local or remote to its host computer, in some embodiments).

These bridging tables 240 are also learned in some embodiments. When the virtual router bridging table 240 does not have an entry for a destination L2 address, in some embodiments the virtual router 210 bridges a data message sent to that address in order for the virtual switch 205 to broadcast the bridged data message (assuming the switch also does not have an entry for the destination address and L2 segment combination). In some embodiments, if an L2 address appears on both the VLAN and the overlay segments (e.g., due to migration from the VLAN to the overlay), the bridging table stores the association with the overlay segment (even when the association with the VLAN is more recent by less than a threshold period of time). Some embodiments also age out the bridging table entries. After bridging a data message, the virtual router 210 sends the modified data message back to the virtual switch 205 for processing based on the destination MAC address and the updated L2 segment identifier. It should also be noted that, while shown as being part of the virtual router itself, in some embodiments the bridge operations are actually implemented as function calls on the virtual router port (i.e., to ensure that any necessary bridging occurs prior to applying logical routing operations).

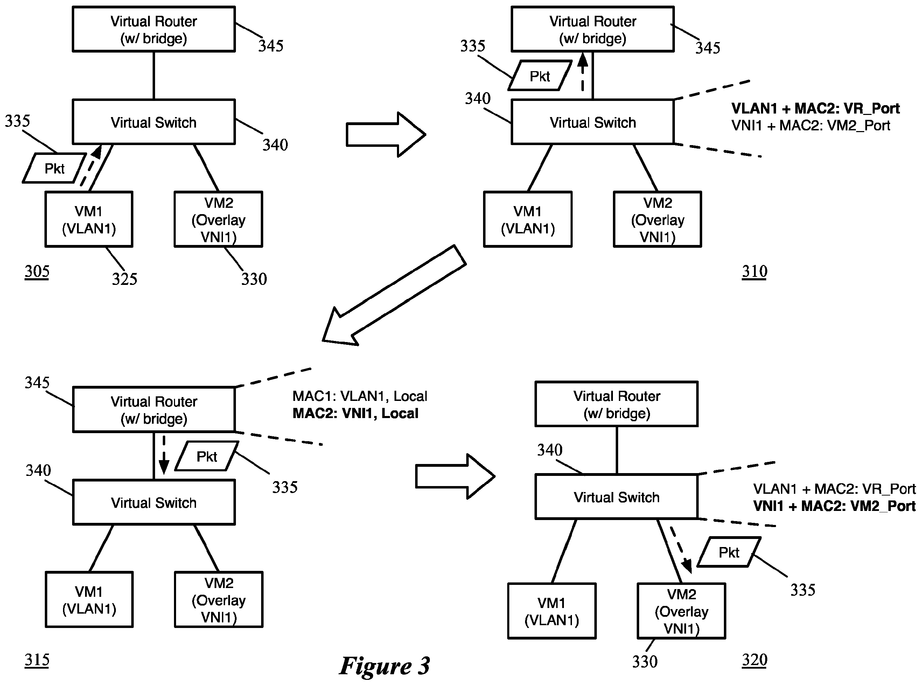

**Figures 3-6** conceptually illustrate different examples of distributed bridging operations according to some embodiments. **Figure 3** first conceptually illustrates bridging a data message sent from a VLAN VM to an overlay VM over four stages 305-320. As shown in the first stage 305, a first VM 325 executing on a host computer sends a data message 335. This data message 335 is addressed to the MAC address of a second VM 330 (MAC2) that also executes on the same host computer. The first VM 325 is connected to a VLAN (VLAN1) while the second VM 330 is connected to a software-defined overlay (with identifier VNI1).

The data message 335 is initially received at a virtual switch 340 of the host computer, which includes interfaces (ports) for at least (i) the first VM 325, (ii) the second VM 330, (iii) and a virtual router 345 (as well as an uplink, not shown in this figure). As shown in the second stage 310, the virtual switch 340 includes multiple entries for the destination address of the data message 335 (MAC2). These entries specify that data messages addressed to MAC2 and associated with VLAN1 should be output to the virtual router port (for bridging), while data messages addressed to MAC2 and associated with the overlay segment VNI1 should be output to the port associated with the second VM 330 (because these data messages either do not need to be bridged or have already been bridged). Because the data message 335 is currently associated with VLAN1, the virtual switch 340 forwards the data message to the virtual router 345 (e.g., by passing a data message object or similar data structure representing the data message 335 within the virtualization software to the virtual router 345).

In the third stage 315, the virtual router 345 receives the data message 335 and applies its bridging table to the data message. The virtual router bridging table, as shown, includes entries for each of (at least) MAC1 (the MAC address of the first VM 325) and MAC2. The first entry specifies that MAC1 is associated with VLAN1 and is local to the host computer while the second entry specifies that MAC2 is associated with the overlay segment identifier VNI1 and is also local to the host computer. Based on the second entry, the virtual router 345 bridges the data message 335 to the overlay segment (e.g., by removing the VLAN tag and associating the data message with the overlay segment identifier). The virtual router 345 sends the modified data message 335 back to the virtual switch 340.

The fourth stage 320 illustrates that the virtual switch 340 applies its second entry for MAC2 to the data message 335 (as received from the virtual router 345 after bridging), which specifies to output data messages addressed to MAC2 and associated with the overlay segment identifier VNI1 to the output port for the second VM 330. As such, the virtual switch 340 outputs the data message 335 to the second VM 330.

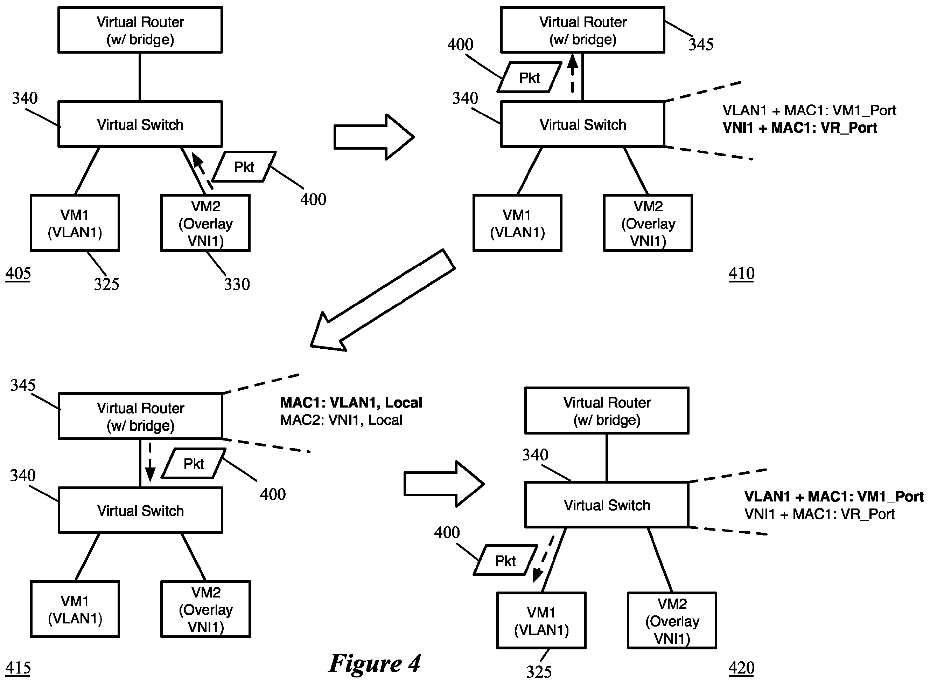

**Figure 4** conceptually illustrates bridging a data message sent from the overlay VM 330 to the VLAN VM 325 over four stages 405-420. As shown in the first stage 405, the second VM 330 sends a data message 400 which is addressed to the MAC address of the first VM 325 (MAC1) that also executes on the same host computer. In this case, the sending VM 330 is connected to the software-defined overlay (with identifier VNI1) while the destination VM 325 is connected to VLAN1.

The data message 400 is initially received at the virtual switch 340. As shown in the second stage 410, the virtual switch 340 also includes multiple entries for the destination address of the data message 400 (MAC1). These entries specify that data messages addressed to MAC1 and associated with VLAN1 should be output to the port associated with the first VM 325 (because these data messages either do not need to be bridged or have already been bridged), while data messages addressed to MAC1 and associated with the overlay segment VNI1 should be output to the virtual router port (for bridging). Because the data message 400 is currently associated with the overlay segment VNI1, the virtual switch 340 forwards the data message 400 to the virtual router 345 (e.g., by passing a data message object or similar data structure representing the data message 400 within the virtualization software to the virtual router 345).

In the third stage 415, the virtual router 345 receives the data message 400 and applies its bridging table to the data message. The virtual router bridging table, as described above, includes entries for each of (at least) MAC1 and MAC2. Based on the first entry, the virtual router 345 bridges the data message 400 to the VLAN (e.g., by removing an association with the overlay segment identifier and adding the VLAN tag to the data message). The virtual router 345 sends the modified data message 400 back to the virtual switch 340.

The fourth stage 420 illustrates that the virtual switch 340 applies its first entry for MAC1 to the data message 400 (as received from the virtual router 345 after bridging), which specifies to output data messages addressed to MAC2 and associated with VLAN1 to the output port for the first VM 325. As such, the virtual switch 340 outputs the data message to the second VM 330.

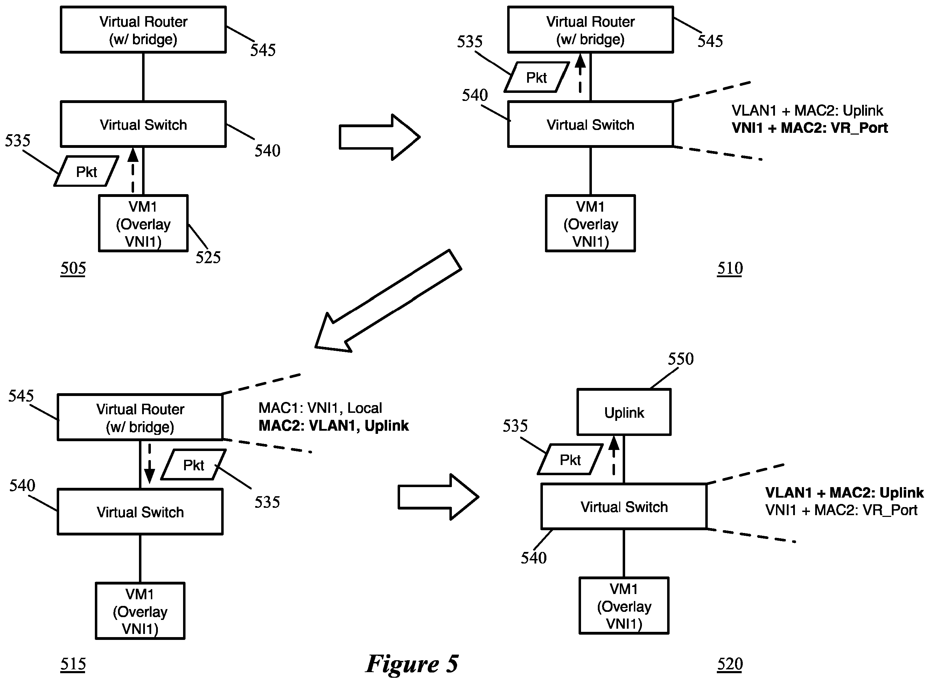

**Figure 5** conceptually illustrates bridging a data message sent from an overlay VM to a VLAN VM that is located on a different host computer over four stages 505-520. As shown in the first stage 505, a first VM 525 executing on a host computer sends a data message 535. This data message 535 is addressed to the MAC addressed of a second VM (MAC2) that is not shown in the figure because the VM executes on a different host computer. The first VM 525 is connected to a software-defined overlay with identifier VNI1 while the second VM is connected to a VLAN (VLAN1).

As in the previous cases, the data message 535 is initially received at a virtual switch 540 of the host computer on which the sending VM 525 executes. This virtual switch 540 includes interfaces (ports) for at least (i) the first VM 525, (ii) a virtual router 545, and (iii) an uplink 550, shown in the fourth stage 520. As shown in the second stage 510, the virtual switch 540 includes multiple entries for the destination address of the data message 535 (MAC2). These entries specify that data messages addressed to MAC2 and associated with VLAN1 should be output to the uplink (to be sent through the datacenter network to the host computer on which the destination VM executes), while data messages addressed to MAC2 and associated with the overlay segment VNI1 should be output to the virtual router port (for bridging). Because the data message 535 is currently associated with the overlay segment VNI1, the virtual switch 540 forwards the data message to the virtual router 545 (e.g., by passing a data message object or similar data structure representing the data message 535 within the virtualization software to the virtual router 545).

In the third stage 515, the virtual router 545 receives the data message 535 and applies its bridging table to the data message. The virtual router bridging table includes entries for each at least MAC 1 (the MAC address of the first VM 525) and MAC2. Based on the second entry, the virtual router 545 bridges the data message 535 to the VLAN (e.g., by removing an association with the overlay segment identifier and adding the VLAN tag to the data message). The virtual router 545 sends the modified data message 535 back to the virtual switch 540.

The fourth stage 520 illustrates that the virtual switch 540 applies its first entry for MAC2 to the data message 535 (as received from the virtual router 545 after bridging), which specifies to output data messages addressed to MAC2 and associated with VLAN1 to the uplink port. As such, the virtual switch 540 outputs the data message 535 to the uplink 550, via which the data message is sent to the datacenter network. In some embodiments, because the data message 535 is associated with the VLAN rather than a software-defined overlay, the data message is not encapsulated by the tunnel endpoint before being forwarded onto the datacenter network. When this data message reaches the host computer on which the destination VM executes, the data message will be delivered to that destination VM by the virtual switch without bridging because the data message was already bridged at the source and thus has the appropriate VLAN tag for the destination VM.

Data messages sent from VMs attached to the VLAN to overlay VMs, on the other hand, are bridged at the destination host computer in some embodiments. When a VLAN VM sends such a data message, the virtual switch at the host computer does not send the data message to the virtual router and instead directly forwards the data message onto the datacenter network.

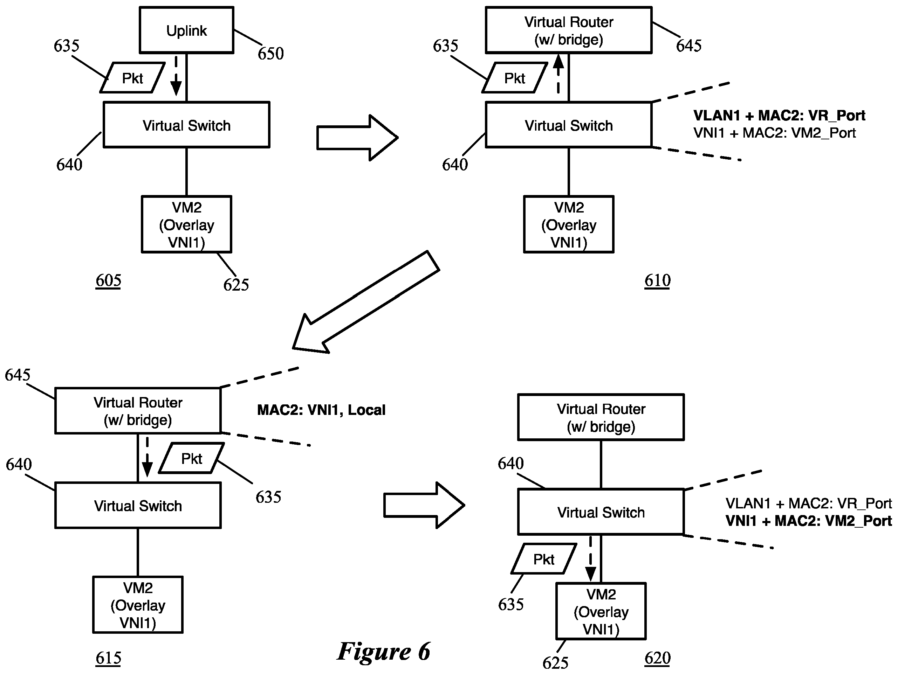

**Figure 6** conceptually illustrates bridging a data message sent from a VLAN VM to an overlay VM located on a different host computer over four stages 605-620. In this case, a first VM (now shown in the figure) that is attached to VLAN1 sends a data message 635 to a second VM 625. The data message 635 is not bridged on the source host computer because, as described previously, bridging occurs on the host computer of the overlay VM in some embodiments. As shown in the first stage 605, the data message 635 is received at the uplink 650 (from the datacenter network) with the VLAN1 tag appended. The uplink 650 forwards the data message to the virtual switch 640 on the host computer.

The virtual switch 640 includes interfaces (ports) for at least (i) the second VM 625, (ii) a virtual router 645, and (iii) the uplink 650. As shown in the second stage 610, the virtual switch 640 includes multiple entries for the destination address of the data message 635 (MAC2). These entries specify that data messages addressed to MAC2 and associated with VLAN1 should be output to the virtual router port (for bridging), while data messages addressed to MAC2 and associated with the overlay segment VNI1 should be output to the port associated with the second VM 625. Because the data message 635 is currently associated with VLAN1, the virtual switch 640 forwards the data message to the virtual router 645 (e.g., by passing a data message object or similar data structure representing the data message 635 within the virtualization software to the virtual router 645).

In the third stage 615, the virtual router 645 receives the data message 635 and applies its bridging table to the data message. The virtual router bridging table, as shown, includes entries for (at least) MAC2 (the MAC address of the second VM 625). This entry specifies that MAC2 is associated with the overlay segment identifier VN1 and is local to the host computer. Based on this entry, the virtual router 645 bridges the data message 635 to the overlay segment (e.g., by removing the VLAN tag and associating the data message with the overlay segment identifier). The virtual router 645 sends the modified data message 635 back to the virtual switch 640.

The fourth stage 620 illustrates that the virtual switch 640 applies its second entry for MAC2 to the data message 635 (as received from the virtual router 640 after bridging), which specifies to output data messages addressed to MAC2 and associated with the overlay segment identifier VNI1 to the interface for the VM 625. As such, the virtual switch 640 outputs the data message 635 to the VM 625.

In the example shown in **Figure 6****,** the host computer on which the recipient VM 625 executes only includes a single uplink. In some cases, however, a host computer includes multiple physical NICs that each map to a different uplink. In this case, different entities on the host computer (e.g., the VM 625 and the port of the virtual router 645) might be associated with different uplinks. In general, the same uplink should be used irrespective of whether an incoming data message is a VLAN data message (needing to be bridged) or an overlay data message that can be directly provided to the VM 625. Because the virtual router port may be associated with a different uplink, some embodiments disable a reverse path forwarding check performed at the uplink that would normally drop data messages associated with the bridged network if those data messages are not received at the correct uplink.

In the above examples, the virtual switches have already learned the correct output interfaces for the destination MAC address and L2 segment combinations. When a recipient virtual switch has not yet learned the output interface for the destination address and L2 segment combination of a data message, the virtual switch performs at least a partial flooding operation of the data message.

For a data message associated with the VLAN, the virtual switch sends copies of the data message (i) onto the network via the uplink and (ii) to the virtual router to be bridged (if needed). The bridged copy of the data message can then be delivered to a local VM if appropriate. However, in some embodiments, the bridged copy of the data message (associated with the VNI) is not subsequently sent to the network, because this would require sending numerous unicast messages to the network and thereby tax the network. Further, such data messages would appropriately be bridged at the destination host computer.

For a data message associated with the overlay segment, the virtual switch sends copies of the data message (i) onto the network via the uplink and (ii) to the virtual router to be bridged (if needed). In this case, the non-bridged copy of the data message is processed normally (as would be the case for any overlay network data message for which the destination MAC address was not learned). In this case, the bridged copy of the data message (associated with the VLAN) is delivered to a local VM if appropriate, but can also be subsequently sent to the network.

The bridging tables stored by the virtual router are also learned in some embodiments. When a routing module does not have an entry for a destination L2 address, in some embodiments the routing module bridges data messages sent to that address in order for the virtual switch to broadcast the bridged data message (assuming the switch also does not have an entry for the destination address and L2 segment combination).

As noted above, in some embodiments the bridging is needed because the physical L2 segment and overlay L2 segment span the same broadcast domain during a migration period for the datacenter. During this period, the network endpoints (e.g., VMs) are migrated from the physical L2 segment to the overlay L2 segment. The overlay segment is managed by the network management system and thus this migration typically occurs after an enterprise begins using the network management system to manage their network. In the rare case that all of the network endpoints can be taken down for a relatively short time period (e.g., one or two hours), then the entire network segment can be migrated to the overlay L2 segment and no bridging is needed. However, the more common case is that due to various enterprise requirements the majority of the network endpoints need to be running at any given time. In this case, the endpoints are migrated in batches over a period of time (e.g., days, weeks, or even months) during which the bridging is needed for data messages transmitted between endpoints on different L2 segments.

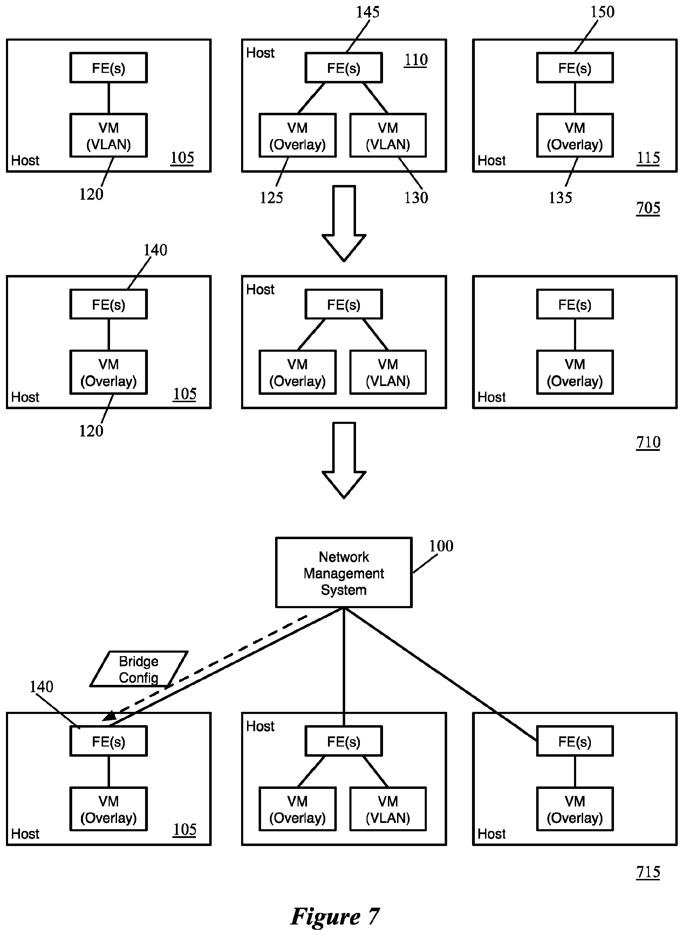

**Figure 7** conceptually illustrates the host computers 105-115 shown in **Figure 1** over three stages 705-715 in which the first VM 120 is migrated to the overlay segment. The first stage 705 matches the state of **Figure 1****,** in which the first and third VMs 120 and 130 are connected to the VLAN while the second and fourth VMs 125 and 135 are connected to the logical overlay segment. As noted above, the forwarding elements 145 and 150 executing on the second and third host computers 110 and 115 have received the bridge configuration data.

The second stage 710 shows that after a period of time (including some amount of downtime for the first VM 120), the first VM 120 has been migrated to the logical overlay segment. In some embodiments, this entails taking down the VM, modifying its configuration, and restarting the VM. In addition, the network management system 100 accounts for the new logical network endpoint in the configuration data that it generates. As such, in the third stage 715, the network management system 100 provides bridge configuration data to the forwarding element 140 executing on the first host computer 105. At this stage, bridging is still required because the third VM 130 remains connected to the VLAN.

In addition, when each network endpoint migrates from the physical L2 segment to the overlay L2 segment, in some embodiments the network endpoint broadcasts a gratuitous address response protocol (GARP) message to the network to indicate that its L2 address now (i) is located at its host computer, (ii) corresponds to a particular layer 3 (L3) address (e.g., IP address), and (iii) is connected to the logical overlay network L2 segment. Some embodiments do not modify either the L2 or L3 address of the network endpoint when migrating that endpoint, but nevertheless ensure that the endpoints send the GARP message to indicate the movement to the overlay segment (and in case the endpoint has moved to a new host computer).

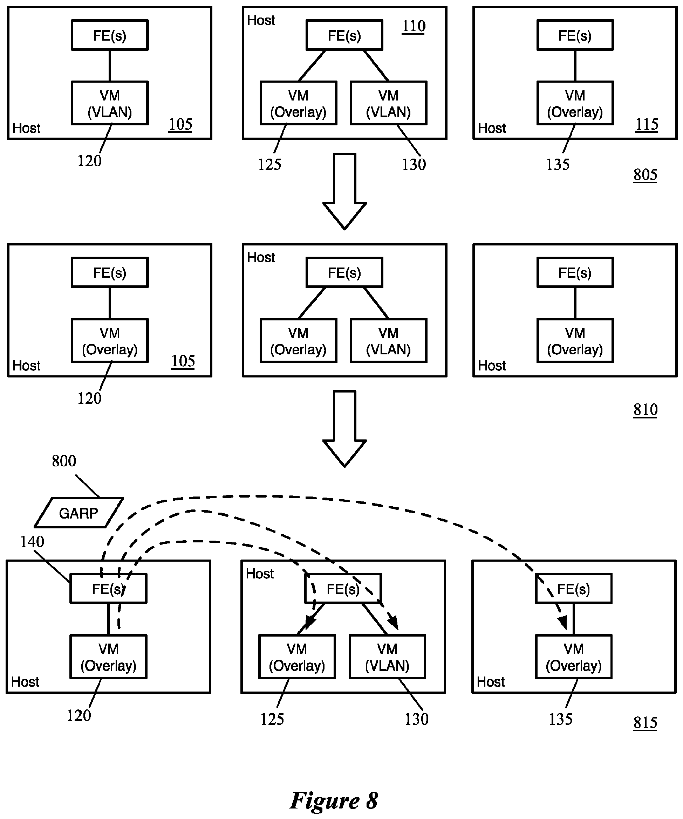

**Figure 8** also conceptually illustrates the host computers 105-115 shown in **Figure 1** over three stages 805-815 in which the first VM 120 is migrated to the overlay segment and sends out a GARP message to indicate its new status. The first two stages 805 and 810 are the same as the first two stages 705 and 710, as the VM 120 moves from the VLAN to the logical overlay segment. In the third stage 815, this VM 120 sends a GARP message 800. In some embodiments, the GARP message 800 is a broadcast message that should reach all of the network endpoints (both on the VLAN and the overlay segment). As such, the forwarding elements 140 on the first host computer 105 send separate unicast copies of the GARP message 800 to the second and fourth VMs 125 and 135. In addition, these forwarding elements 140 bridge a copy of the GARP message 800 to the VLAN and send this bridged copy to the third VM 130 that remains connected to the VLAN.

Similarly, if a network endpoint is rolled back from the logical overlay segment to the VLAN, the network endpoint will again broadcast a GARP message to the network. This rollback may take place, for example, if a problem occurs within the network (e.g., the application to which the migrating endpoints belong is malfunctioning) and the enterprise wants to resolve the problem before engaging in further troubleshooting. In this case, the GARP message indicates that the L2 address of the rolled back network endpoint (i) is located at its host computer, (ii) corresponds to a particular layer 3 (L3) address (e.g., IP address), and (iii) is connected to the VLAN.

In the above examples, the network endpoints connected to the physical and overlay L2 segments (i) all execute on host computers with forwarding elements that can be managed by the network management system and (ii) do not communicate with other network endpoints in other broadcast domains. However, neither of these conditions will necessarily hold in certain deployments.

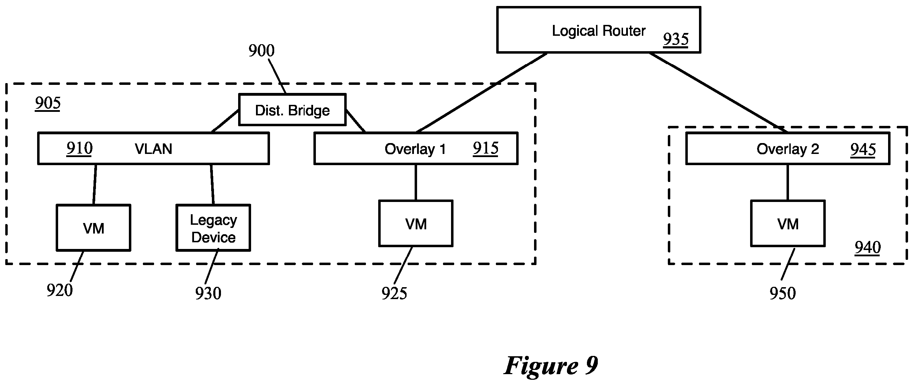

**Figure 9** conceptually illustrates a logical view of a network having network endpoints connected across multiple broadcast domains with a legacy device connected to a VLAN in the bridged broadcast domain. As shown, within a first broadcast domain 905, a distributed bridge 900 connects a VLAN 910 with a software-defined overlay 915. VMs 920 and 925, respectively, connect to the VLAN 910 and overlay 915. These VMs 920 and 925 communicate with each other in the manner described above, with the details depending on whether they execute on the same host computer or on different host computers.

In addition, a legacy device 930 connects to the VLAN 910 within the broadcast domain 905. The legacy device 930 may be a bare metal computing device connected to the VLAN 910 or a VM (or other data compute node) operating on a host computer that is not managed by the network management system that defines the overlay 915 (i.e., the network management system does not have control over forwarding elements on the host computer). In some embodiments, for data traffic within the broadcast domain 905, processing of traffic between the legacy device 930 and the overlay VM 925 is similar to that described above. Data messages sent from the legacy device 930 to the overlay VM 925 are bridged at the destination host computer on which the overlay VM 925 executes, while return data messages are bridged at the same host computer (the source host computer for these data messages).

In this example, a logical router 935 is also used to connect the first broadcast domain 905 to a second broadcast domain 940. The second broadcast domain 940 does not include any legacy VMs or devices and thus only has a software-defined overlay segment 945 that is defined by the same network management system as the overlay segment 915. Data messages between the VM 950 connected to this overlay segment 945 and the VM 925 are processed according to configuration for both of the overlay segments 915 and 945 (by a virtual switch in the source VM's host computer) as well as for the logical router 935 (by a virtual router in the source VM's host computer) before being encapsulated and sent through the datacenter network to the destination host computer.

Traffic between the VM 950 and either the VM 920 or the legacy device 930 can present additional complications, however. In some embodiments, the data messages must be bridged either before (for data traffic sent from the VLAN 910) or after (for data traffic sent from the VM 950) processing by the logical router 935. Some embodiments configure the host computer on which the VM 950 executes to perform the distributed bridging, even if there are no VMs connected to the first overlay 915 executing on that host computer.

Other embodiments use the forwarding elements at the host computer on which the VM 925 (or another VM connected to the first overlay 915) executes to perform the bridging. Some embodiments designate a specific one of the host computers executing one (or more) of the VMs attached to the overlay 915 to handle bridging from the VLAN 910 to the logical router 935 (e.g., for data traffic directed to the VM 950 or to external network addresses). This traffic, by virtue of being sent to an IP address on a different subnet, is sent to the MAC address of the downlink interface of the logical router 935. As such, the physical datacenter network needs a specific host computer to which to forward traffic directed to this MAC address. Such a host computer may be selected by the network management system that defines the overlay network segment 915 (as well as the logical router 935 and overlay network segment 945). Data traffic sent from the VM 920 or legacy device 930 is forwarded to this particular host computer by the datacenter network and bridged at the particular host computer. That same host computer can then apply the virtual switch configuration for the overlay network 915 to forward the data traffic for distributed logical routing according to the logical router configuration 935.

In addition, in some embodiments the network management system makes additional configuration changes to accommodate the legacy device 930. In some embodiments, a common setup provides the same MAC address for the virtual router port on each of the host computers. This is feasible because this port is only used by the network endpoints operating on that host computer (i.e., as a default gateway) when sending data traffic to the logical router (either to reach a network endpoint on a different broadcast domain or to send data traffic outside of the logical network). However, for data traffic sent from the legacy device 930, a separate MAC address needs to be assigned. In some embodiments, the virtual router on a specific host computer (or a cluster of host computers) is assigned this separate MAC address and data traffic from the legacy device 930 that is sent outside of the broadcast domain 905 is addressed to that MAC address as a default gateway. In some embodiments, the distributed bridge 900 is also logically connected to this separate MAC address, because the distributed bridge 900 bridges traffic from the legacy device 930 prior to virtual routing being applied to the traffic.

Some embodiments only use a logical router (managed by the network management system and implemented by virtual routers on the host computers) once all of the network endpoints have migrated to the overlay (possibly excepting any legacy devices that cannot migrate). In this case, the combination of distributed bridge and logical router only needs to be managed for any legacy devices. Prior to the use of a logical router, the default gateway for all of the network endpoints in the combined broadcast domain is typically a physical router (e.g., a top of rack switch acting as a router).

On the other hand, some embodiments migrate to the logical router prior the completion of migration of the network endpoints. In this case, in some embodiments, the enterprise turns off the layer 3 (L3) interface being used as the default gateway on the physical router while enabling (via the network management system) the downlink interface of the logical router. In some embodiments, the same network address (e.g., IP address) is used for the downlink interface as for the physical router interface so that the default gateway address does not change for the network endpoints in the broadcast domain. However, the L2 address will change, so in some embodiments the logical router (e.g., via the virtual routers on each of the host computers) sends GARP messages with the new default gateway MAC address to all of the network endpoints in the broadcast domain. The distributed bridging operations bridge these GARP message to the network endpoints connected to the VLAN, as needed.

The above description relates to migrating network endpoints from a single VLAN to an overlay network segment. In some embodiments, the existing (pre-migration) network is a hardware-implemented L2 overlay that includes multiple VLANs. In a common datacenter setup, a VLAN only spans a single physical network zone (e.g., a rack of host computers), also referred to as a transport zone. A hardware overlay may span multiple physical network zones, using different VLANs in each of the zones.

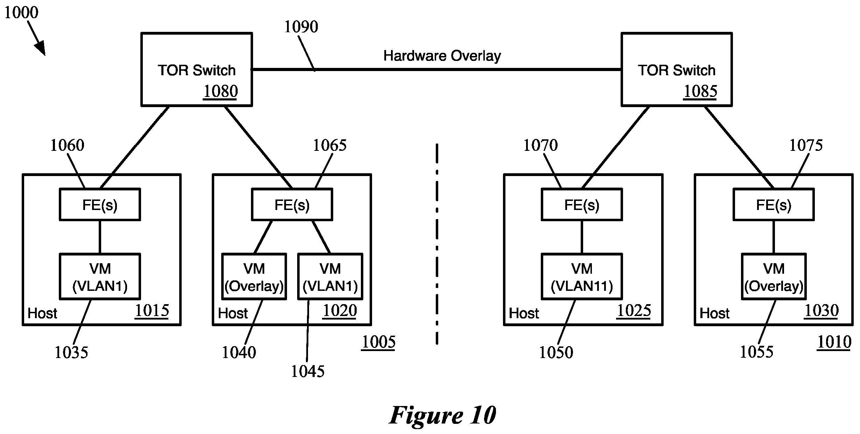

**Figure 10** conceptually illustrates a network 1000 in which VMs are migrated from different VLANs in different physical network zones to the same software-defined overlay that spans the multiple physical network zones. As shown, the network 1000 includes two different physical network zones (e.g., two different server racks in a datacenter) 1005 and 1010. The first network zone 1005 includes at least two host computers 1015 and 1020, while the second network zone 1010 includes at least two host computers 1025 and 1030. In the first network zone 1005, a first VM 1035 connected to a first VLAN (VLAN1) executes on the first host computer 1015 while two VMs 1040 and 1045 that are respectively connected to a software-defined logical overlay segment and the first VLAN execute on the second host computer 1020. In the second network zone 1010, a fourth VM 1050 connected to a second VLAN (VLAN11) executes on the third host computer 1025 while a fifth VM 1055 connected to the software-defined logical overlay segment executes on the fourth host computer 1030. As in the above examples, it should be understood that a typical deployment will include a much larger number of network endpoints operating on a much larger number of host computers.

Forwarding elements 1060-1075 executing on the host computers 1015-1030 connect to top of rack (TOR) switches 1080 and 1085 in the respective network zones 1005 and 1010. Prior to migration, these TOR switches implement a hardware overlay (e.g., a Cisco application centric infrastructure (ACI) overlay or an ethernet VPN (EVPN)) 1090 that allows data traffic between the VMs connected to VLAN1 and VLAN11 in the different network zones 1005 and 1010.

In this context, some embodiments configure the forwarding elements executing on host computers along with network endpoints connected to the software-defined overlay to bridge data messages between these network endpoints and network endpoints connected to any of the VLANs. The network endpoints connected to the software-defined overlay may execute on host computers in any of the physical network zones.

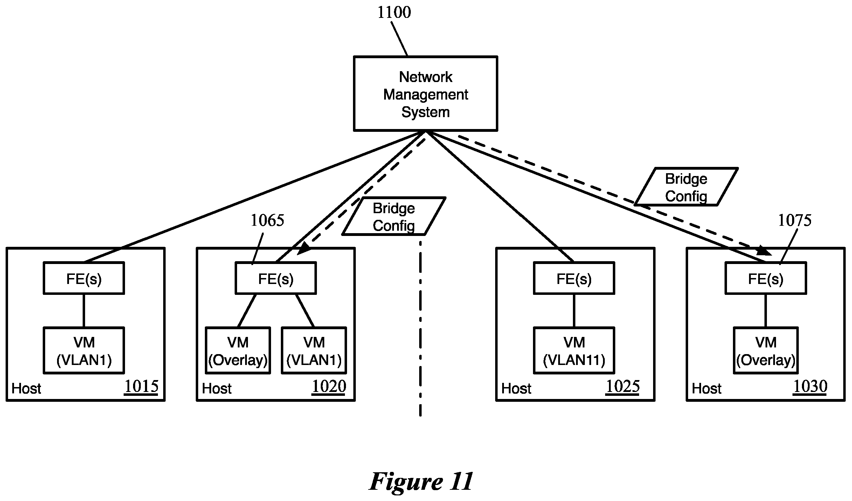

**Figure 11** conceptually illustrates that a network management system 1100 provides bridge configuration data to the forwarding elements 1065 and 1075 on the host computers 1020 and 1030 executing overlay VMs. Because the host computers 1015 and 1025 do not host any overlay VMs, these host computers do not receive the bridge configuration data (and will not perform bridging operations). In some embodiments, this configuration data enables the forwarding elements 1065 and 1075 to bridge data messages between the software-defined overlay and any of the VLANs. That is, the forwarding element 1065 is configured to bridge data messages between the software-defined overlay and both the local VLAN1 and the remote VLAN11, just as the forwarding element 1075 is configured to bridge data messages between the software-defined overlay and both the local VLAN11 and the remote VLAN1. In some embodiments, the network management system 1100 defines and distributes separate bridge configurations to each such set of forwarding elements, with one configuration for bridging to the local VLAN and separate configurations for bridging to each remote VLAN. Traffic sent between a VM connected to VLAN1 and a VM connected to VLAN11 is still handled by the hardware overlay 1090.

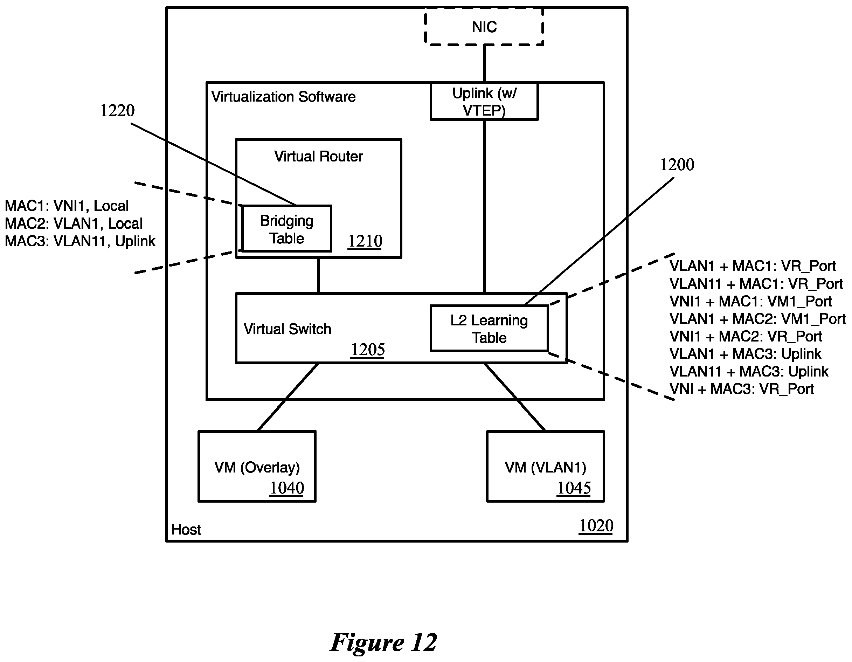

**Figure 12** conceptually illustrates the virtual switch learning table 1200 and the bridging table 1220 for the host computer 1020 on which both an overlay VM 1040 and a VLAN VM 1045 execute. In this case, the forwarding elements (virtual switch 1205 and virtual router 1210) may need to bridge data messages sent from either VLAN1 or VLAN11 to the overlay VM 1040 as well as return traffic sent from the overlay VM 1040 to VMs connected to either of these VLANs.

As shown, the virtual switch learning table 1200 includes entries for handling data messages addressed to each of the local VMs 1040 and 1045 (respectively having L2 addresses of MAC1 and MAC2) as well as a third, remote VM (having MAC3) that is connected to VLAN11. For data messages sent to MAC1, the address of the overlay VM 1040, data traffic associated with either VLAN1 (which could be sent locally from VM 1045 or remotely from another VM connected to VLAN1) or VLAN11 (which would have been sent remotely from a VM connected to VLAN11 in the other physical network zone) are sent to the virtual router 1210 for bridging.

Data messages sent to MAC2 will either be bridged at another host computer (if sent from another overlay VM), be handled through the hardware overlay and thus already be associated with VLAN1 upon receipt at the host computer 1020, or be sent from the local VM 1040 and thus need to be bridged locally. Accordingly, the L2 learning table 1200 stores two entries for MAC2. Traffic directed to MAC2 and associated with the local VLAN1 is forwarded to the VM 1045 while traffic associated with the overlay segment is forwarded to the virtual router 1210 for bridging. Finally, data messages sent to MAC3 are only bridged (i.e., sent to the virtual router 1210) if received from the VM 1040 and thus associated with the logical overlay segment. Data messages associated with VLAN1 (i.e., sent from VM 1045) are sent to the datacenter network and subsequently handled by the physical overlay. The learning table 1200 also stores an entry for data messages sent to MAC3 and associated with VLAN11 to send these data messages to the datacenter network after bridging is performed by the virtual router 1210.

The virtual router 1210, as shown, stores a bridging table 1220. This bridging table 1220 stores entries for each of MAC1, MAC2, and MAC3 (as well as any other MAC addresses connected to either the software-defined overlay or either of the VLANs). In this example, data messages sent to MAC3 are bridged to the remote VLAN11. In other embodiments, these data messages are bridged to VLAN1 and subsequently handled by the physical overlay 1090.

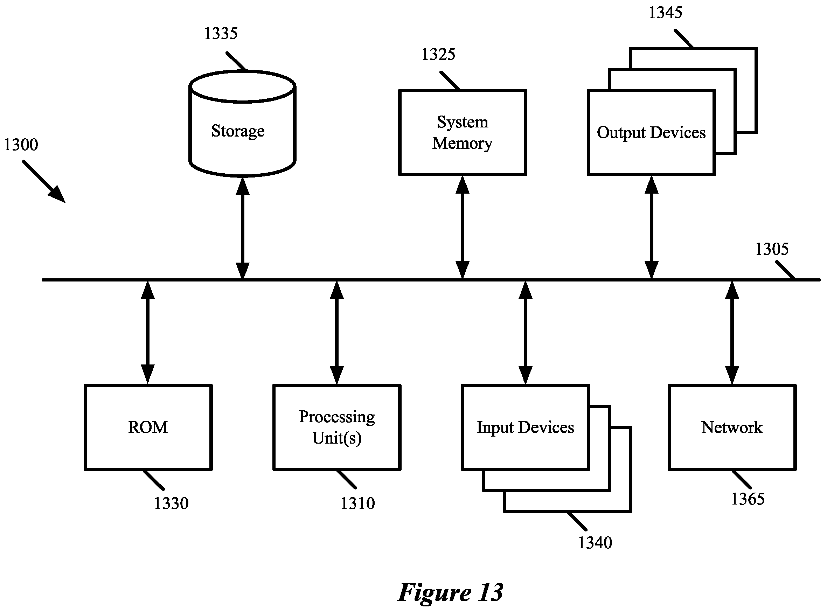

**Figure 13** conceptually illustrates an electronic system 1300 with which some embodiments of the invention are implemented. The electronic system 1300 may be a computer (e.g., a desktop computer, personal computer, tablet computer, server computer, mainframe, a blade computer etc.), phone, PDA, or any other sort of electronic device. Such an electronic system includes various types of computer readable media and interfaces for various other types of computer readable media. Electronic system 1300 includes a bus 1305, processing unit(s) 1310, a system memory 1325, a read-only memory 1330, a permanent storage device 1335, input devices 1340, and output devices 1345.

The bus 1305 collectively represents all system, peripheral, and chipset buses that communicatively connect the numerous internal devices of the electronic system 1300. For instance, the bus 1305 communicatively connects the processing unit(s) 1310 with the read-only memory 1330, the system memory 1325, and the permanent storage device 1335.

From these various memory units, the processing unit(s) 1310 retrieve instructions to execute and data to process in order to execute the processes of the invention. The processing unit(s) may be a single processor or a multi-core processor in different embodiments.

The read-only-memory (ROM) 1330 stores static data and instructions that are needed by the processing unit(s) 1310 and other modules of the electronic system. The permanent storage device 1335, on the other hand, is a read-and-write memory device. This device is a nonvolatile memory unit that stores instructions and data even when the electronic system 1300 is off. Some embodiments of the invention use a mass-storage device (such as a magnetic or optical disk and its corresponding disk drive) as the permanent storage device 1335.

Other embodiments use a removable storage device (such as a floppy disk, flash drive, etc.) as the permanent storage device. Like the permanent storage device 1335, the system memory 1325 is a read-and-write memory device. However, unlike storage device 1335, the system memory is a volatile read-and-write memory, such a random-access memory. The system memory stores some of the instructions and data that the processor needs at runtime. In some embodiments, the invention's processes are stored in the system memory 1325, the permanent storage device 1335, and/or the read-only memory 1330. From these various memory units, the processing unit(s) 1310 retrieve instructions to execute and data to process in order to execute the processes of some embodiments.

The bus 1305 also connects to the input and output devices 1340 and 1345. The input devices enable the user to communicate information and select commands to the electronic system. The input devices 1340 include alphanumeric keyboards and pointing devices (also called "cursor control devices"). The output devices 1345 display images generated by the electronic system. The output devices include printers and display devices, such as cathode ray tubes (CRT) or liquid crystal displays (LCD). Some embodiments include devices such as a touchscreen that function as both input and output devices.

Finally, as shown in **Figure 13****,** bus 1305 also couples electronic system 1300 to a network 1365 through a network adapter (not shown). In this manner, the computer can be a part of a network of computers (such as a local area network ("LAN"), a wide area network ("WAN"), or an Intranet, or a network of networks, such as the Internet. Any or all components of electronic system 1300 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application specific integrated circuits (ASICs) or field programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms display or displaying means displaying on an electronic device. As used in this specification, the terms "computer readable medium," "computer readable media," and "machine readable medium" are entirely restricted to tangible, physical objects that store information in a form that is readable by a computer. These terms exclude any wireless signals, wired download signals, and any other ephemeral signals.

This specification refers throughout to computational and network environments that include virtual machines (VMs). However, virtual machines are merely one example of data compute nodes (DCNs) or data compute end nodes, also referred to as addressable nodes. DCNs may include non-virtualized physical hosts, virtual machines, containers that run on top of a host operating system without the need for a hypervisor or separate operating system, and hypervisor kernel network interface modules.

VMs, in some embodiments, operate with their own guest operating systems on a host using resources of the host virtualized by virtualization software (e.g., a hypervisor, virtual machine monitor, etc.). The tenant (i.e., the owner of the VM) can choose which applications to operate on top of the guest operating system. Some containers, on the other hand, are constructs that run on top of a host operating system without the need for a hypervisor or separate guest operating system. In some embodiments, the host operating system uses name spaces to isolate the containers from each other and therefore provides operating-system level segregation of the different groups of applications that operate within different containers. This segregation is akin to the VM segregation that is offered in hypervisor-virtualized environments that virtualize system hardware, and thus can be viewed as a form of virtualization that isolates different groups of applications that operate in different containers. Such containers are more lightweight than VMs.

Hypervisor kernel network interface modules, in some embodiments, is a non-VM DCN that includes a network stack with a hypervisor kernel network interface and receive/transmit threads. One example of a hypervisor kernel network interface module is the vmknic module that is part of the ESXi^{™} hypervisor of VMware, Inc.

It should be understood that while the specification refers to VMs, the examples given could be any type of DCNs, including physical hosts, VMs, non-VM containers, and hypervisor kernel network interface modules. In fact, the example networks could include combinations of different types of DCNs in some embodiments.

In addition, a number of the figures conceptually illustrate processes. The specific operations of these processes may not be performed in the exact order shown and described. The specific operations may not be performed in one continuous series of operations, and different specific operations may be performed in different embodiments. Furthermore, the process could be implemented using several sub-processes, or as part of a larger macro process. Thus, one of ordinary skill in the art would understand that the invention is not to be limited by the foregoing illustrative details, but rather is to be defined by the appended claims.

## Claims

1. A method for configuring a network to bridge data messages between a logical overlay network layer 2, L2, segment and a physical L2 segment, the method being **characterized by** comprising the steps of:
identifying each host computer (110, 115) in the network on which at least one logical network endpoint (125, 135) connected to the logical overlay network L2 segment executes; and
for each identified host computer (110, 115), configuring a forwarding element (145, 150) executing on the identified host computer (110, 115) to bridge data messages sent from the logical network endpoints (125, 135) executing on the identified host computer (110, 115) to network endpoints (130) connected to the physical L2 segment and data messages sent from network endpoints (120, 130) connected to the physical L2 segment, executing on the identified host computer (110, 115) and on other host computers (105) in the network, to the logical network endpoints (125, 135) executing on the identified host computer (110, 115).

2. The method of claim 1, wherein for a particular host computer (110, 115), the forwarding element (145, 150) is a logical routing module executing on the host (110, 115) that also implements one or more distributed logical routers to which the logical overlay network L2 segment connects.

3. The method of claim 1 or 2, wherein the physical L2 segment is a virtual local area network, VLAN, and the logical overlay network L2 segment is one of a virtual extensible local area network, VXLAN, and a generic network virtual encapsulation, Geneve, overlay network.

4. The method of any one of the claims 1 to 3, wherein the forwarding elements (145, 150) executing on the host computers (110, 115) bridge the data messages during migration (705, 710) of the network endpoints (120) from the physical L2 segment to the logical overlay network L2 segment;
wherein in particular when a particular network endpoint (120) migrates from the physical L2 segment to the logical overlay network L2 segment:
the particular network endpoint (120) sends a gratuitous address request protocol, GARP, message to the network to indicate that an L2 address of the particular network endpoint (120) is now located at the particular host computer (105) on which the particular network endpoint (120) executes, is connected to the logical overlay network L2 segment, and has a particular layer 3 address that maps to the L2 address;
the forwarding element (140) executing on the particular host computer (105) bridges a copy of the GARP message from the logical overlay L2 segment to the physical L2 segment and sends a copy of the GARP message onto the physical L2 segment for delivery to any network endpoints connected to the physical L2 segment that have not yet migrated to the logical overlay network L2 segment.

5. The method of any one of the claims 1 to 4, wherein each respective forwarding element (145, 150) executing on a respective host computer (110, 115) bridges the data messages that are sent from the logical network endpoints (125, 135) executing on the respective host computer (105, 110, 115) to the network endpoints (120, 130) connected to the physical L2 segment by removing physical L2 segment information from headers of the data messages and appending to the data message headers indicating logical overlay network L2 segment information.

6. The method of any one of the claims 1 to 5, wherein each respective forwarding element (140, 145) executing on a respective host computer bridges the data messages sent from network endpoints (120, 130) connected to the physical L2 segment to the logical network endpoints (125, 135) executing on the identified host computer (110, 115) by removing logical overlay network L2 segment information from headers of the data messages and appending to the data message headers indicating physical L2 segment information.

7. The method of any one of the claims 1 to 6, wherein each respective forwarding element (150) executing on a respective host computer (115) does not bridge any data messages sent from network endpoints (120, 130) connected to the physical L2 segment executing on the respective host computer (115) to logical network endpoints (125) executing on other host computers (105, 110) or any data messages sent from logical network endpoints (125) executing on other host computers (110) to network endpoints connected to the physical L2 segment.

8. The method of any one of the claims 1 to 7, wherein a particular forwarding element (205) executing on a particular host computer (200):
receives a data message, directed to an L2 address of a network endpoint (220) connected to the physical L2 segment, from a logical network endpoint (218) executing on the host computer (200);
determines whether an L2 learning table (235) stored by the particular forwarding element (205) includes an entry for the L2 address specifying the physical L2 segment to which the network endpoint (220) is connected and whether the network endpoint (220) executes on the particular host computer (200); and
when the L2 learning table (235) include an entry for the L2 address specifying the physical L2 segment and whether the network endpoint (220) executes on the particular host computer (200), bridges the data message to the physical L2 segment and directs the bridged data message to the network endpoint (220);
wherein in particular the particular forwarding element (205) is a logical routing module (210); and
when the L2 learning table entry specifies that the network endpoint (220) executes on the particular host computer (220), the logical routing module (210) provides the bridged data message to a virtual switch (205) executing on the particular host (200) computer that delivers the bridged data message to the network endpoint (220);
or
when the L2 learning table entry specifies that the network endpoint executes outside the particular host computer (200), the logical routing module provides the bridged data message to a virtual switch (205) executing on the particular host computer (200) that delivers the bridged data message to an uplink port (230) of the particular host computer (200) to be sent to a different host computer on which the network endpoint executes via a physical network.

9. The method of any one of the claims 1 to 8, wherein a particular forwarding element (205) executing on a particular host computer (200):
receives a data message, directed to an L2 address of a logical network endpoint (218) executing on the particular host computer (200) but with headers for the physical L2 segment;
determines whether an L2 learning table (235) stored by the particular forwarding element (205) includes an entry for the L2 address specifying the logical overlay network L2 segment to which the logical network endpoint (218) is connected and whether the network endpoint (220) executes on the particular host computer (200); and
when the L2 learning table (235) include an entry for the L2 address specifying the logical overlay network L2 segment and that the network endpoint (220) executes on the particular host computer (200), bridges the data message to the physical L2 segment and directs the bridged data message to the logical network endpoint (218);
wherein in particular the particular forwarding element (205) is a logical routing module (210), wherein a virtual switch (205) executing on the particular host computer (200):
receives the data message from an uplink port (230) that connects to a physical network;
uses a first L2 learning entry for data messages having physical L2 segment information and directed to the L2 address of the logical network endpoint (218) to provide the data message to the logical routing module (210);
receives the bridged data message from the logical routing module (210); and
uses a second L2 learning entry for data messages having logical overlay network L2 segment information and directed to the L2 address of the logical network endpoint (218) to provide the data message to the logical network endpoint (218).

10. A non-transitory machine-readable medium storing a program which when executed by at least one processing unit configures a network to bridge data messages between a logical overlay network layer 2, L2, segment and a physical L2 segment, the program comprising sets of instructions for controlling and/or carrying out all steps of a method as set forth in any one of the preceding claims 1 to 9.

11. A method for configuring a network to bridge data messages between a hardware-implemented layer 2, L2, overlay network segment and a software-implemented L2 overlay network segment, the method being **characterized by** comprising the steps of:
identifying a host computer (1020) on which a logical network endpoint connected (1040) to the software-implemented logical L2 overlay network segment executes, wherein the hardware-implemented L2 overlay network segment connects at least a first set of network endpoints (1035, 1045) located in a first physical network zone (1005) and connected to a first L2 network segment and a second set of network endpoints (1050, 1055) located in a second physical network zone (1010) and connected to a second L2 network segment and the identified host computer (1020) is located in the first physical network zone (1005); and
configuring a forwarding element (1065) executing on the identified host computer (1020) to bridge data messages between the logical network endpoint (1040) and the first set of network endpoints (1035, 1045) located in the first physical network zone (1005) and connected to the first L2 network segment and the second set of network endpoints (1050, 1055) located in the second physical network zone (1010) and connected to the second L2 network segment.

12. The method of claim 11, wherein the forwarding element (1065) bridges the data messages during migration of the first and second sets of network endpoints from the first and second L2 network segments to the software-implemented overlay network segment;
wherein in particular the first and second L2 network segments are respectively confined to the first and second physical network zones (1005, 1010) while the software-implemented logical L2 overlay network segment spans at least the first and second physical network zones (1005, 1010).

13. The method of claim 11 or 12, further comprising configuring forwarding elements (1065, 1075), on each respective host computer (1020, 1030) on which at least one logical network endpoint (1040, 1055) connected to the software-implemented logical L2 overlay network segment executes, to bridge data messages between the logical network endpoints (1040, 1055) executing on the respective host computer (1020, 1030) and the first set of network endpoints (1035, 1045) located in the first physical network zone (1005) and connected to the first L2 network segment and the second set of network endpoints (1050, 1055) located in the second physical network zone (1010) and connected to the second L2 network segment.

14. The method of any one of the claims 11 to 13, wherein:
the hardware-implemented L2 overlay network segment also connects a third set of network endpoints located in a third physical network zone and connected to a third L2 network segment; and
configuring the forwarding element (1065) comprises configuring the forwarding element (1065) to bridge data messages between the logical network endpoint (1040) and the third set of endpoints located in a third physical network zone and connected to a third L2 network segment.

15. The method of any one of the claims 11 to 14, wherein:
the forwarding element (1065) is a virtual routing module (1210) executing on the host computer (1020);
a virtual switch (1205) also executes on the host computer (1020) and directs data messages to the virtual routing module (1210) when bridging is required; and
the virtual switch stores separate L2 address learning entries for data messages directed to the logical network endpoint (1040) that include information for the first L2 network segment, data messages directed to the logical network endpoint (1040) that include information for the second L2 network segment, and data messages directed to the logical network endpoint (1040) that include information for the software-implemented L2 overlay network segment;
wherein in particular
the entries for data messages directed to the logical network endpoint (1040) that include information for the first L2 network segment and for the second L2 network segment specify for the virtual switch (1205) to direct said data messages to the virtual routing module to be bridged to the software-implemented L2 overlay network segment; and
the entries for data messages directed to the logical network endpoint (1040) that include information for the software-implemented L2 overlay network segment specify for the virtual switch (1205) to direct said data messages to the logical network endpoint (1040).

16. The method of any one of the claims 11 to 15, wherein the logical network endpoint (1040) is a first network endpoint:
the host computer (1020) is located in the first physical network zone (1005);
a second network endpoint connected to the first L2 network segment executes on the host computer (1020); and
the forwarding element (1065) is not configured to bridge data messages sent from the second network endpoint to logical network endpoints connected to the software-implemented L2 overlay network segment and executing on other host computers;
wherein in particular data messages sent from the second network endpoint to logical network endpoints connected to the software-implemented L2 overlay network segment and executing on another host computer are bridged by another forwarding element executing on the other host computer.

17. The method of any one of the claims 11 to 16, wherein the first and second L2 network segments are virtual local area networks, VLANs.

18. A non-transitory machine-readable medium storing a program which when executed by at least one processing unit configures a network to bridge data messages between a hardware-implemented layer 2, L2, overlay network segment and a software-implemented L2 overlay network segment, the program comprising sets of instructions for controlling and/or carrying out all steps of a method as set forth in any one of the preceding claims 11 to 17.

## Patentansprüche

1. Ein Verfahren zum Konfigurieren eines Netzwerks zum Überbrücken von Datennachrichten zwischen einem logischen Overlay-Netzwerkschicht-2-, L2-, Segment und einem physischen L2-Segment, wobei das Verfahren **dadurch gekennzeichnet ist, dass** es die folgenden Schritte aufweist:
Identifizieren jedes Host-Computers (110, 115) in dem Netzwerk, auf dem zumindest ein logischer Netzwerkendpunkt (125, 135), der mit dem logischen Overlay-Netzwerk-L2-Segment verbunden ist, ausgeführt wird; und
für jeden identifizierten Host-Computer (110, 115), Konfigurieren eines Weiterleitungselements (145, 150), das auf dem identifizierten Host-Computer (110, 115) ausgeführt wird, zum Überbrücken von Datennachrichten, die von den logischen Netzwerkendpunkten (125, 135), die auf dem identifizierten Host-Computer (110, 115) ausgeführt werden, an Netzwerkendpunkte (130), die mit dem physischen L2-Segment verbunden sind, gesendet werden, und Datennachrichten, die von Netzwerkendpunkten (120, 130), die mit dem physischen L2-Segment verbunden sind, die auf dem identifizierten Host-Computer (110, 115) und auf anderen Host-Computern (105) in dem Netzwerk ausgeführt werden, an die logischen Netzwerkendpunkte (125, 135) gesendet werden, die auf dem identifizierten Host-Computer (110, 115) ausgeführt werden.

2. Das Verfahren gemäß Anspruch 1, wobei für einen bestimmten Host-Computer (110, 115) das Weiterleitungselement (145, 150) ein logisches Routingmodul ist, das auf dem Host (110, 115) ausgeführt wird, das auch einen oder mehrere verteilte logische Router implementiert, mit denen das logische Overlay-Netzwerk-L2-Segment verbunden ist.

3. Das Verfahren gemäß Anspruch 1 oder 2, wobei das physische L2-Segment ein virtuelles lokales Netzwerk, VLAN, ist und das logische Overlay-Netzwerk-L2-Segment eines von einem virtuellen erweiterbaren lokalen Netzwerk, VXLAN, und einem generischen virtuellen Netzwerkverkapselungs-, Geneve-, Overlay-Netzwerk ist.

4. Das Verfahren gemäß einem der Ansprüche 1 bis 3, wobei die Weiterleitungselemente (145, 150), die auf den Host-Computern (110, 115) ausgeführt werden, die Datennachrichten während einer Migration (705, 710) der Netzwerkendpunkte (120) von dem physischen L2-Segment zu dem logischen Overlay-Netzwerk-L2-Segment überbrücken;
wobei, insbesondere wenn ein bestimmter Netzwerkendpunkt (120) von dem physischen L2-Segment zu dem logischen Overlay-Netzwerk-L2-Segment migriert:
der bestimmte Netzwerkendpunkt (120) eine kostenlose Adressanforderungsprotokoll-, GARP-, Nachricht an das Netzwerk sendet, um anzuzeigen, dass sich eine L2-Adresse des bestimmten Netzwerkendpunkts (120) nun an dem bestimmten Host-Computer (105) befindet, auf dem der bestimmte Netzwerkendpunkt (120) ausgeführt wird, mit dem logischen Overlay-Netzwerk-L2-Segment verbunden ist und eine bestimmte Schicht-3-Adresse hat, die der L2-Adresse zugeordnet ist;
das Weiterleitungselement (140), das auf dem bestimmten Host-Computer (105) ausgeführt wird, eine Kopie der GARP-Nachricht von dem logischen Overlay-L2-Segment zu dem physischen L2-Segment überbrückt und eine Kopie der GARP-Nachricht auf das physische L2-Segment zur Lieferung an beliebige Netzwerkendpunkte sendet, die mit dem physischen L2-Segment verbunden sind, die noch nicht zu dem logischen Overlay-Netzwerk-L2-Segment migriert sind.

5. Das Verfahren gemäß einem der Ansprüche 1 bis 4, wobei jedes jeweilige Weiterleitungselement (145, 150), das auf einem jeweiligen Host-Computer (110, 115) ausgeführt wird, die Datennachrichten überbrückt, die von den logischen Netzwerkendpunkten (125, 135), die auf dem jeweiligen Host-Computer (105, 110, 115) ausgeführt werden, an die Netzwerkendpunkte (120, 130) gesendet werden, die mit dem physischen L2-Segment verbunden sind, durch Entfernen von physischen L2-Segmentinformationen aus Headern der Datennachrichten und Anhängen an die Datennachrichten-Header, die logische Overlay-Netzwerk-L2-Segmentinformationen anzeigen.

6. Das Verfahren gemäß einem der Ansprüche 1 bis 5, wobei jedes jeweilige Weiterleitungselement (140, 145), das auf einem jeweiligen Host-Computer ausgeführt wird, die Datennachrichten überbrückt, die von Netzwerkendpunkten (120, 130), die mit dem physischen L2-Segment verbunden sind, an die logischen Netzwerkendpunkte (125, 135) gesendet werden, die auf dem identifizierten Host-Computer (110, 115) ausgeführt werden, durch Entfernen von logischen Overlay-Netzwerk-L2-Segmentinformationen aus Headern der Datennachrichten und Anhängen an die Datennachrichten-Header, die physische L2-Segmentinformationen anzeigen.

7. Das Verfahren gemäß einem der Ansprüche 1 bis 6, wobei jedes jeweilige Weiterleitungselement (150), das auf einem jeweiligen Host-Computer (115) ausgeführt wird, keine Datennachrichten überbrückt, die von Netzwerkendpunkten (120, 130), die mit dem physischen L2-Segment verbunden sind, die auf dem jeweiligen Host-Computer (115) ausgeführt werden, an logische Netzwerkendpunkte (125) gesendet werden, die auf anderen Host-Computern (105, 110) ausgeführt werden, oder keine Datennachrichten überbrückt, die von logischen Netzwerkendpunkten (125), die auf anderen Host-Computern (110) ausgeführt werden, an Netzwerkendpunkte gesendet werden, die mit dem physischen L2-Segment verbunden sind.

8. Das Verfahren gemäß einem der Ansprüche 1 bis 7, wobei ein bestimmtes Weiterleitungselement (205), das auf einem bestimmten Host-Computer (200) ausgeführt wird:
eine Datennachricht empfängt, die an eine L2-Adresse eines Netzwerkendpunkts (220) gerichtet ist, der mit dem physischen L2-Segment verbunden ist, von einem logischen Netzwerkendpunkt (218), der auf dem Host-Computer (200) ausgeführt wird;
bestimmt, ob eine L2-Lerntabelle (235), die von dem bestimmten Weiterleitungselement (205) gespeichert wird, einen Eintrag für die L2-Adresse enthält, der das physische L2-Segment spezifiziert, mit dem der Netzwerkendpunkt (220) verbunden ist, und ob der Netzwerkendpunkt (220) auf dem bestimmten Host-Computer (200) ausgeführt wird; und
wenn die L2-Lerntabelle (235) einen Eintrag für die L2-Adresse enthält, der das physische L2-Segment spezifiziert, und ob der Netzwerkendpunkt (220) auf dem bestimmten Host-Computer (200) ausgeführt wird, die Datennachricht zu dem physischen L2-Segment überbrückt und die überbrückte Datennachricht zu dem Netzwerkendpunkt (220) leitet;
wobei insbesondere das bestimmte Weiterleitungselement (205) ein logisches Routingmodul (210) ist; und
wenn der L2-Lerntabelleneintrag spezifiziert, dass der Netzwerkendpunkt (220) auf dem bestimmten Host-Computer (220) ausgeführt wird, das logische Routingmodul (210) die überbrückte Datennachricht an einen virtuellen Schalter (205) bereitstellt, der auf dem bestimmten Host-Computer (200) ausgeführt wird, der die überbrückte Datennachricht an den Netzwerkendpunkt (220) liefert;
oder
wenn der L2-Lerntabelleneintrag spezifiziert, dass der Netzwerkendpunkt außerhalb des bestimmten Host-Computers (200) ausgeführt wird, das logische Routingmodul die überbrückte Datennachricht an einen virtuellen Schalter (205) bereitstellt, der auf dem bestimmten Host-Computer (200) ausgeführt wird, der die überbrückte Datennachricht an einen Uplink-Port (230) des bestimmten Host-Computers (200) liefert, um über ein physisches Netzwerk an einen anderen Host-Computer gesendet zu werden, auf dem der Netzwerkendpunkt ausgeführt wird.

9. Das Verfahren gemäß einem der Ansprüche 1 bis 8, wobei ein bestimmtes Weiterleitungselement (205), das auf einem bestimmten Host-Computer (200) ausgeführt wird:
eine Datennachricht empfängt, die an eine L2-Adresse eines logischen Netzwerkendpunkts (218) gerichtet ist, der auf dem bestimmten Host-Computer (200) ausgeführt wird, aber mit Headern für das physische L2-Segment;
bestimmt, ob eine L2-Lerntabelle (235), die von dem bestimmten Weiterleitungselement (205) gespeichert wird, einen Eintrag für die L2-Adresse enthält, der das logische Overlay-Netzwerk-L2-Segment spezifiziert, mit dem der logische Netzwerkendpunkt (218) verbunden ist, und ob der Netzwerkendpunkt (220) auf dem bestimmten Host-Computer (200) ausgeführt wird; und
wenn die L2-Lerntabelle (235) einen Eintrag für die L2-Adresse enthält, der das logische Overlay-Netzwerk-L2-Segment spezifiziert, und dass der Netzwerkendpunkt (220) auf dem bestimmten Host-Computer (200) ausgeführt wird, die Datennachricht zu dem physischen L2-Segment überbrückt und die überbrückte Datennachricht zu dem logischen Netzwerkendpunkt (218) leitet;
wobei insbesondere das bestimmte Weiterleitungselement (205) ein logisches Routingmodul (210) ist, wobei ein virtueller Schalter (205), der auf dem bestimmten Host-Computer (200) ausgeführt wird:
die Datennachricht von einem Uplink-Port (230) empfängt, der mit einem physischen Netzwerk verbunden ist;
einen ersten L2-Lerneintrag für Datennachrichten verwendet, die physische L2-Segmentinformationen haben und an die L2-Adresse des logischen Netzwerkendpunkts (218) gerichtet sind, um die Datennachricht an das logische Routingmodul (210) bereitzustellen;
die überbrückte Datennachricht von dem logischen Routingmodul (210) empfängt; und
einen zweiten L2-Lerneintrag für Datennachrichten verwendet, die logische Overlay-Netzwerk-L2-Segmentinformationen haben und an die L2-Adresse des logischen Netzwerkendpunkts (218) gerichtet sind, um die Datennachricht an den logischen Netzwerkendpunkt (218) bereitzustellen.

10. Ein nicht transitorisches maschinenlesbares Medium, das ein Programm speichert, das, wenn es durch zumindest eine Verarbeitungseinheit ausgeführt wird, ein Netzwerk zum Überbrücken von Datennachrichten zwischen einem logischen Overlay-Netzwerkschicht-2-, L2-, Segment und einem physischen L2-Segment konfiguriert, wobei das Programm Sätze von Anweisungen zum Steuern und/oder Ausführen aller Schritte eines Verfahrens gemäß einem der vorhergehenden Ansprüche 1 bis 9 aufweist.

11. Ein Verfahren zum Konfigurieren eines Netzwerks zum Überbrücken von Datennachrichten zwischen einem hardwareimplementierten Schicht-2-, L2-, Overlay-Netzwerksegment und einem softwareimplementierten L2-Overlay-Netzwerksegment, wobei das Verfahren **dadurch gekennzeichnet ist, dass** es die folgenden Schritte aufweist:
Identifizieren eines Host-Computers (1020), auf dem ein logischer Netzwerkendpunkt (1040), der mit dem softwareimplementierten logischen L2-Overlay-Netzwerksegment verbunden ist, ausgeführt wird, wobei das hardwareimplementierte L2-Overlay-Netzwerksegment zumindest einen ersten Satz von Netzwerkendpunkten (1035, 1045), die sich in einer ersten physischen Netzwerkzone (1005) befinden und mit einem ersten L2-Netzwerksegment verbunden sind, und einen zweiten Satz von Netzwerkendpunkten (1050, 1055), die sich in einer zweiten physischen Netzwerkzone (1010) befinden und mit einem zweiten L2-Netzwerksegment verbunden sind, verbindet und sich der identifizierte Host-Computer (1020) in der ersten physischen Netzwerkzone (1005) befindet; und
Konfigurieren eines Weiterleitungselements (1065), das auf dem identifizierten Host-Computer (1020) ausgeführt wird, zum Überbrücken von Datennachrichten zwischen dem logischen Netzwerkendpunkt (1040) und dem ersten Satz von Netzwerkendpunkten (1035, 1045), die sich in der ersten physischen Netzwerkzone (1005) befinden und mit dem ersten L2-Netzwerksegment verbunden sind, und dem zweiten Satz von Netzwerkendpunkten (1050, 1055), die sich in der zweiten physischen Netzwerkzone (1010) befinden und mit dem zweiten L2-Netzwerksegment verbunden sind.

12. Das Verfahren gemäß Anspruch 11, wobei das Weiterleitungselement (1065) die Datennachrichten während einer Migration des ersten und des zweiten Satzes von Netzwerkendpunkten von dem ersten und dem zweiten L2-Netzwerksegment zu dem softwareimplementierten Overlay-Netzwerksegment überbrückt;
wobei insbesondere das erste und das zweite L2-Netzwerksegment jeweils auf die erste und die zweite physische Netzwerkzone (1005, 1010) beschränkt sind, während das softwareimplementierte logische L2-Overlay-Netzwerksegment zumindest die erste und die zweite physische Netzwerkzone (1005, 1010) überspannt.

13. Das Verfahren gemäß Anspruch 11 oder 12, das weiter aufweist Konfigurieren von Weiterleitungselementen (1065, 1075) auf jedem jeweiligen Host-Computer (1020, 1030), auf dem zumindest ein logischer Netzwerkendpunkt (1040, 1055), der mit dem softwareimplementierten logischen L2-Overlay-Netzwerksegment verbunden ist, ausgeführt wird, zum Überbrücken von Datennachrichten zwischen den logischen Netzwerkendpunkten (1040, 1055), die auf dem jeweiligen Host-Computer (1020, 1030) ausgeführt werden, und dem ersten Satz von Netzwerkendpunkten (1035, 1045), die sich in der ersten physischen Netzwerkzone (1005) befinden und mit dem ersten L2-Netzwerksegment verbunden sind, und dem zweiten Satz von Netzwerkendpunkten (1050, 1055), die sich in der zweiten physischen Netzwerkzone (1010) befinden und mit dem zweiten L2-Netzwerksegment verbunden sind.

14. Das Verfahren gemäß einem der Ansprüche 11 bis 13, wobei:
das hardwareimplementierte L2-Overlay-Netzwerksegment auch einen dritten Satz von Netzwerkendpunkten verbindet, die sich in einer dritten physischen Netzwerkzone befinden und mit einem dritten L2-Netzwerksegment verbunden sind; und
das Konfigurieren des Weiterleitungselements (1065) aufweist Konfigurieren des Weiterleitungselements (1065) zum Überbrücken von Datennachrichten zwischen dem logischen Netzwerkendpunkt (1040) und dem dritten Satz von Endpunkten, die sich in einer dritten physischen Netzwerkzone befinden und mit einem dritten L2-Netzwerksegment verbunden sind.

15. Das Verfahren gemäß einem der Ansprüche 11 bis 14, wobei:
das Weiterleitungselement (1065) ein virtuelles Routingmodul (1210) ist, das auf dem Host-Computer (1020) ausgeführt wird;
ein virtueller Schalter (1205) auch auf dem Host-Computer (1020) ausgeführt wird und Datennachrichten an das virtuelle Routingmodul (1210) leitet, wenn Überbrückung erforderlich ist; und
der virtuelle Schalter separate L2-Adresslerneinträge für Datennachrichten speichert, die an den logischen Netzwerkendpunkt (1040) gerichtet sind, die Informationen für das erste L2-Netzwerksegment enthalten, Datennachrichten, die an den logischen Netzwerkendpunkt (1040) gerichtet sind, die Informationen für das zweite L2-Netzwerksegment enthalten, und Datennachrichten, die an den logischen Netzwerkendpunkt (1040) gerichtet sind, die Informationen für das softwareimplementierte L2-Overlay-Netzwerksegment enthalten;
wobei insbesondere
die Einträge für Datennachrichten, die an den logischen Netzwerkendpunkt (1040) gerichtet sind, die Informationen für das erste L2-Netzwerksegment und für das zweite L2-Netzwerksegment enthalten, spezifizieren, dass der virtuelle Schalter (1205) die Datennachrichten an das virtuelle Routingmodul leitet, um zu dem softwareimplementierten L2-Overlay-Netzwerksegment überbrückt zu werden; und
die Einträge für Datennachrichten, die an den logischen Netzwerkendpunkt (1040) gerichtet sind, die Informationen für das softwareimplementierte L2-Overlay-Netzwerksegment enthalten, spezifizieren, dass der virtuelle Schalter (1205) die Datennachrichten an den logischen Netzwerkendpunkt (1040) leitet.

16. Das Verfahren gemäß einem der Ansprüche 11 bis 15, wobei der logische Netzwerkendpunkt (1040) ein erster Netzwerkendpunkt ist:
der Host-Computer (1020) befindet sich in der ersten physischen Netzwerkzone (1005);
ein zweiter Netzwerkendpunkt, der mit dem ersten L2-Netzwerksegment verbunden ist, wird auf dem Host-Computer (1020) ausgeführt; und
das Weiterleitungselement (1065) ist nicht konfiguriert zum Überbrücken von Datennachrichten, die von dem zweiten Netzwerkendpunkt an logische Netzwerkendpunkte gesendet werden, die mit dem softwareimplementierten L2-Overlay-Netzwerksegment verbunden sind und auf anderen Host-Computern ausgeführt werden;
wobei insbesondere Datennachrichten, die von dem zweiten Netzwerkendpunkt an logische Netzwerkendpunkte gesendet werden, die mit dem softwareimplementierten L2-Overlay-Netzwerksegment verbunden sind und auf einem anderen Host-Computer ausgeführt werden, durch ein anderes Weiterleitungselement überbrückt werden, das auf dem anderen Host-Computer ausgeführt wird.

17. Das Verfahren gemäß einem der Ansprüche 11 bis 16, wobei das erste und das zweite L2-Netzwerksegment virtuelle lokale Netzwerke, VLANs, sind.

18. Ein nicht transitorisches maschinenlesbares Medium, das ein Programm speichert, das, wenn es durch zumindest eine Verarbeitungseinheit ausgeführt wird, ein Netzwerk zum Überbrücken von Datennachrichten zwischen einem hardwareimplementierten Schicht-2-, L2-, Overlay-Netzwerksegment und einem softwareimplementierten L2-Overlay-Netzwerksegment konfiguriert, wobei das Programm Sätze von Anweisungen zum Steuern und/oder Ausführen aller Schritte eines Verfahrens gemäß einem der vorhergehenden Ansprüche 11 bis 17 aufweist.

## Revendications

1. Procédé de configuration d'un réseau pour assurer le pontage de messages de données entre un segment de couche de réseau de superposition logique 2, L2 et un segment de L2 physique, le procédé étant **caractérisé en ce qu'**il comprend les étapes consistant à :
identifier chaque ordinateur hôte (110, 115) dans le réseau sur lequel au moins un point d'extrémité de réseau logique (125, 135) connecté au segment de L2 de réseau de superposition logique s'exécute ; et
pour chaque ordinateur hôte identifié (110, 115), configurer un élément de transfert (145, 150) s'exécutant sur l'ordinateur hôte identifié (110, 115) pour assurer le pontage de messages de données envoyés à partir des points d'extrémité de réseau logique (125, 135) s'exécutant sur l'ordinateur hôte identifié (110, 115) aux points d'extrémité de réseau (130) connectés au segment de L2 physique et de messages de données envoyés à partir des points d'extrémité de réseau (120, 130) connectés au segment de L2 physique, s'exécutant sur l'ordinateur hôte identifié (110, 115) et sur d'autres ordinateurs hôtes (105) dans le réseau, aux points d'extrémité de réseau logique (125, 135) s'exécutant sur l'ordinateur hôte identifié (110, 115).

2. Procédé selon la revendication 1, dans lequel pour un ordinateur hôte particulier (110, 115), l'élément de transfert (145, 150) est un module de routage logique s'exécutant sur l'hôte (110, 115) qui met également en œuvre un ou plusieurs routeurs logiques distribués auxquels le segment de L2 de réseau de superposition logique se connecte.

3. Procédé selon la revendication 1 ou 2, dans lequel le segment de L2 physique est un réseau local virtuel, VLAN, et le segment de L2 logique de réseau de superposition logique est un parmi un réseau local extensible virtuel, VXLAN, et un réseau de superposition d'encapsulation virtuelle de réseau générique, Geneve.

4. Procédé selon l'une quelconque des revendications 1 à 3, dans lequel les éléments de transfert (145, 150) exécutant sur les ordinateurs hôtes (110, 115) assurent le pontage de messages de données pendant une migration (705, 710) des points d'extrémité de réseau (120) du segment de L2 physique au segment de L2 de réseau de superposition logique ;
dans lequel en particulier lorsqu'un point d'extrémité de réseau particulier (120) migre du segment de L2 physique vers le segment de L2 de réseau de superposition logique :
le point d'extrémité de réseau particulier (120) envoie un message de protocole de demande d'adresse gratuite, GARP, au réseau pour indiquer qu'une adresse de L2 du point d'extrémité de réseau particulier (120) est maintenant située au niveau de l'ordinateur hôte particulier (105) sur lequel le point d'extrémité de réseau particulier (120) s'exécute, est connectée au segment de L2 de réseau de superposition logique, et présente une adresse de couche 3 particulière qui correspond à l'adresse de L2 ;
l'élément de transfert (140) s'exécutant sur l'ordinateur hôte particulier (105) assure le montage d'une copie du message GARP du segment de L2 de superposition logique au segment de L2 physique et envoie une copie du message GARP sur le segment de L2 physique pour une livraison à tous les points d'extrémité de réseau connectés au segment de L2 physique qui n'ont pas encore migré vers le segment de L2 de réseau de superposition logique.

5. Procédé selon l'une quelconque des revendications 1 à 4, dans lequel chaque élément de transfert respectif (145, 150) s'exécutant sur un ordinateur hôte respectif (110, 115) assure le pontage de messages de données qui sont envoyés à partir des points d'extrémité de réseau logique (125, 135) s'exécutant sur l'ordinateur hôte respectif (105, 110, 115) aux points d'extrémité de réseau (120, 130) connectés au segment de L2 physique en supprimant des informations de segment de L2 physique à partir d'en-têtes des messages de données et en ajoutant au message de données des en-têtes indiquant des informations de segment de L2 de réseau de superposition logique.

6. Procédé selon l'une quelconque des revendications 1 à 5, dans lequel chaque élément de transfert respectif (140, 145) s'exécutant sur un ordinateur hôte respectif assure le montage des messages de données envoyés à partir de points d'extrémité de réseau (120, 130) connectés au segment de L2 physique aux points d'extrémité de réseau logique (125, 135) s'exécutant sur l'ordinateur hôte identifié (110, 115) en supprimant des informations de segment de L2 de réseau de superposition logique à partir d'en-têtes des messages de données et en ajoutant aux messages de données des en-têtes indiquant des informations de segment de L2 physique.

7. Procédé selon l'une quelconque des revendications 1 à 6, dans lequel chaque élément de transfert respectif (150) s'exécutant sur un ordinateur hôte respectif (115) n'assure pas le pontage de quelconques messages de données envoyés à partir de points d'extrémité de réseau (120, 130) connectés au segment de L2 physique s'exécutant sur l'ordinateur hôte respectif (115) à des points d'extrémité de réseau logique (125) s'exécutant sur d'autres ordinateurs hôtes (105, 110) ou de quelconques messages de données envoyés à partir de points d'extrémité de réseau logique (125) s'exécutant sur d'autres ordinateurs hôtes (110) à des points d'extrémité de réseau connectés au segment de L2 physique.

8. Procédé selon l'une quelconque des revendications 1 à 7, dans lequel un élément de transfert particulier (205) s'exécutant sur un ordinateur hôte particulier (200) :
reçoit un message de données, dirigé vers une adresse de L2 d'un point d'extrémité de réseau (220) connecté au segment de L2 physique, à partir d'un point d'extrémité de réseau logique (218) s'exécutant sur l'ordinateur hôte (200) ;
détermine si une table d'apprentissage de L2 (235) stockée par l'élément de transfert particulier (205) inclut une entrée pour l'adresse de L2 spécifiant le segment de L2 physique auquel le point d'extrémité de réseau (220) est connecté et si le point d'extrémité de réseau (220) s'exécute sur l'ordinateur hôte particulier (200) ; et
lorsque la table d'apprentissage de L2 (235) inclut une entrée pour l'adresse de L2 spécifiant le segment de L2 physique et si le point d'extrémité de réseau (220) s'exécute sur l'ordinateur hôte particulier (200), assure le pontage du message de données au segment de L2 physique et dirige le message de données ponté vers le point d'extrémité de réseau (220) ;
dans lequel en particulier l'élément de transfert particulier (205) est un module de routage logique (210) ; et
lorsque l'entrée de table d'apprentissage de L2 spécifie que le point d'extrémité de réseau (220) s'exécute sur l'ordinateur hôte particulier (220), le module de routage logique (210) fournit le message de données ponté à un commutateur virtuel (205) s'exécutant sur l'ordinateur hôte particulier (200) qui délivre le message de données ponté au point d'extrémité de réseau (220) ; ou
lorsque l'entrée de table d'apprentissage de L2 spécifie que le point d'extrémité de réseau s'exécute à l'extérieur de l'ordinateur hôte particulier (200), le module de routage logique fournit le message de données ponté à un commutateur virtuel (205) s'exécutant sur l'ordinateur hôte particulier (200) qui délivre le message de données ponté à un port de liaison montante (230) de l'ordinateur hôte particulier (200) pour être envoyé à un ordinateur hôte différent sur lequel le point d'extrémité de réseau s'exécute via un réseau physique.

9. Procédé selon l'une quelconque des revendications 1 à 8, dans lequel un élément de transfert particulier (205) s'exécutant sur un ordinateur hôte particulier (200) :
reçoit un message de données, dirigé vers une adresse de L2 d'un point d'extrémité de réseau logique (218) s'exécutant sur l'ordinateur hôte particulier (200) mais avec des en-têtes pour le segment de L2 physique ;
détermine si une table d'apprentissage de L2 (235) stockée par l'élément de transfert particulier (205) inclut une entrée pour l'adresse de L2 spécifiant le segment de L2 de réseau de superposition logique auquel le logique point d'extrémité de réseau (220) est connecté et si le point d'extrémité de réseau (220) s'exécute sur l'ordinateur hôte particulier (200) ; et
lorsque la table d'apprentissage de L2 (235) inclut une entrée pour l'adresse de L2 spécifiant le segment de L2 de réseau de superposition logique et le point d'extrémité de réseau (220) s'exécute sur l'ordinateur hôte particulier (200), assure le pontage du message de données au segment de L2 physique et dirige le message de données ponté vers le point d'extrémité de réseau logique (218) ;
dans lequel en particulier l'élément de transfert particulier (205) est un module de routage logique (210), dans lequel un commutateur virtuel (205) s'exécutant sur l'ordinateur hôte particulier (200) :
reçoit le message de données en provenance d'un port de liaison montante (230) qui se connecte à un réseau physique ;
utilise une première entrée d'apprentissage de L2 pour des messages de données présentant des informations de segment de L2 physique et dirigés vers l'adresse de L2 du point d'extrémité de réseau logique (218) pour fournir le message de données au module de routage logique (210) ;
reçoit le message de données ponté depuis le module de routage logique (210) ; et
utilise une seconde entrée d'apprentissage de L2 pour des messages de données présentant des informations de segment de L2 de réseau de superposition logique et dirigés vers l'adresse de L2 du point d'extrémité de réseau logique (218) afin de fournir le message de données au point d'extrémité de réseau logique (218).

10. Support lisible par machine non transitoire stockant un programme qui, lorsqu'il est exécuté par au moins une unité de traitement, configure un réseau pour assurer le pontage de messages de données entre un segment de couche de réseau de superposition logique 2, L2, et un segment de L2 physique, le programme comprenant des ensembles d'instructions pour commander et/ou exécuter toutes les étapes d'un procédé selon l'une quelconque des revendications précédentes 1 à 9.

11. Procédé de configuration d'un réseau pour assurer le pontage de messages de données entre un segment de réseau de superposition de couche 2, L2, implémenté dans du matériel et un segment de réseau de superposition de couche L2 implémenté dans un logiciel, le procédé étant **caractérisé en ce qu'**il comprend les étapes consistant à :
identifier un ordinateur hôte (1020) sur lequel un point d'extrémité de réseau logique connecté (1040) au segment de réseau de superposition de L2 logique implémenté dans un logiciel s'exécute, dans lequel le segment de réseau de superposition de L2 implémenté dans du matériel connecte au moins un premier ensemble de points d'extrémité de réseau (1035, 1045) situés dans une première zone de réseau physique (1005) et connectés à un premier segment de réseau de L2 et un deuxième ensemble de points d'extrémité de réseau (1050, 1055) situés dans une deuxième zone de réseau physique (1010) et connectés à un deuxième segment de réseau de L2 et l'ordinateur hôte identifié (1020) est situé dans la première zone de réseau physique (1005) ; et
configurer un élément de transfert (1065) s'exécutant sur l'ordinateur hôte identifié (1020) pour assurer le pontage de messages de données entre le point d'extrémité de réseau logique (1040) et le premier ensemble de points d'extrémité de réseau (1035, 1045) situés dans la première zone de réseau physique (1005) et connectés au premier segment de réseau de L2 et le deuxième ensemble de points d'extrémité de réseau (1050, 1055) situés dans la deuxième zone de réseau physique (1010) et connectés au deuxième segment de réseau de L2.

12. Procédé selon la revendication 11, dans lequel l'élément de transfert (1065) assure le pontage des messages de données pendant la migration des premier et deuxième ensembles de points d'extrémité de réseau depuis les premier et deuxième segments de réseau de L2 vers le segment de réseau de superposition implémenté dans un logiciel ;
dans lequel en particulier les premier et deuxième segments de réseau de L2 sont respectivement confinés aux première et deuxième zones de réseau physique (1005, 1010) tandis que le segment de réseau de superposition de L2 logique implémenté dans un logiciel couvre au moins les première et deuxième zones de réseau physique (1005, 1010).

13. Procédé selon la revendication 11 ou 12, comprenant en outre une configuration d'éléments de transfert (1065, 1075), sur chaque ordinateur hôte respectif (1020, 1030) sur lequel au moins un point d'extrémité de réseau logique (1040, 1055) connecté au segment de réseau de superposition de L2 logique implémenté dans un logiciel s'exécute, pour assurer le pontage de messages de données entre les points d'extrémité de réseau logique (1040, 1055) s'exécutant sur l'ordinateur hôte respectif (1020, 1030) et le premier ensemble de points d'extrémité de réseau (1035, 1045) situés dans la première zone de réseau physique (1005) et connectés au premier segment de réseau de L2 et le deuxième ensemble de points d'extrémité de réseau (1050, 1055) situés dans la deuxième zone de réseau physique (1010) et connectés au deuxième segment de réseau de L2.

14. Procédé selon l'une quelconque des revendications 11 à 13, dans lequel
le segment de réseau de superposition de L2 implémenté dans du matériel connecte également un troisième ensemble de points d'extrémité de réseau situés dans une troisième zone de réseau physique et connectés à un troisième segment de réseau de L2 ; et
configurer l'élément de transfert (1065) comprend une configuration de l'élément de transfert (1065) pour assurer le pontage de messages de données entre le point d'extrémité de réseau logique (1040) et le troisième ensemble de points d'extrémité situés dans une troisième zone de réseau physique et connectés à un troisième segment de réseau de L2.

15. Procédé selon l'une quelconque des revendications 11 à 14, dans lequel
l'élément de transfert (1065) est un module de routage virtuel (1210) s'exécutant sur l'ordinateur hôte (1020) ;
un commutateur virtuel (1205) s'exécute également sur l'ordinateur hôte (1020) et dirige des messages de données vers le module de routage virtuel (1210) lorsqu'un pontage est nécessaire ; et
le commutateur virtuel stocke des entrées d'apprentissage d'adresse de L2 séparées pour des messages de données dirigés vers le point d'extrémité de réseau logique (1040) qui comprennent des informations pour le premier segment de réseau de L2, des messages de données dirigés vers le point d'extrémité de réseau logique (1040) qui comprennent des informations pour le deuxième segment de réseau de L2, et des messages de données dirigés vers le point d'extrémité de réseau logique (1040) qui comprennent des informations pour le segment de réseau de superposition de L2 implémenté dans un logiciel ;
dans lequel en particulier
les entrées pour des messages de données dirigés vers le point d'extrémité de réseau logique (1040) qui incluent des informations pour le premier segment de réseau de L2 et pour le deuxième segment de réseau L2 spécifient au commutateur virtuel (1205) de diriger lesdits messages de données vers le module de routage virtuel pour un pontage vers le segment de réseau de superposition L2 implémenté dans un logiciel ; et
les entrées pour des messages de données dirigés vers le point d'extrémité de réseau logique (1040) qui comprennent des informations pour le segment de réseau de superposition de L2 implémenté dans un logiciel spécifient pour le commutateur virtuel (1205) de diriger lesdits messages de données vers le point d'extrémité de réseau logique (1040).

16. Procédé selon l'une quelconque des revendications 11 à 15, dans lequel le point d'extrémité de réseau logique (1040) est un premier point d'extrémité de réseau :
l'ordinateur hôte (1020) est situé dans la première zone de réseau physique (1005) ;
un second point d'extrémité de réseau connecté au premier segment de réseau de L2 s'exécute sur l'ordinateur hôte (1020) ; et
l'élément de transfert (1065) n'est pas configuré pour assurer le pontage de messages de données envoyés à partir du deuxième point d'extrémité de réseau vers des points d'extrémité de réseau logique connectés au segment de réseau de superposition de L2 implémenté dans un logiciel et s'exécutant sur d'autres ordinateurs hôtes ;
dans lequel en particulier des messages de données envoyés à partir du deuxième point d'extrémité de réseau à des points d'extrémité de réseau logique connectés au segment de réseau de superposition L2 implémenté dans un logiciel et s'exécutant sur un autre ordinateur hôte sont pontés par un autre élément de transfert s'exécutant sur l'autre ordinateur hôte.

17. Procédé selon l'une quelconque des revendications 11 à 16, dans lequel les premier et deuxième segments de réseau de L2 sont des réseaux locaux virtuels, VLAN.

18. Support lisible par machine non transitoire stockant un programme qui, lorsqu'il est exécuté par au moins une unité de traitement, configure un réseau pour assurer le pontage de messages de données entre un segment de réseau de superposition de couche de 2, L2, implémenté dans du matériel et un segment de réseau de superposition de couche de L2 implémenté dans un logiciel, le programme comprenant des ensembles d'instructions pour commander et/ou exécuter toutes les étapes d'un procédé selon l'une quelconque des revendications 11 à 17 précédentes.
